# EUROPÄISCHE PATENTANMELDUNG

(11) **EP 4 786 926 A1**
(43) Veröffentlichungstag der Anmeldung: **05.08.2026**
(21) Anmeldenummer: 26156400.9
(22) Anmeldetag: 04.02.2026
(51) Int. Cl.: G01C 23/00, G08G 5/21, G08G 5/74

(54) **SYSTEM UND VERFAHREN ZUR VERBESSERTEN TOPOGRAPHIEANZEIGE UND FLUGDATENNUTZUNG FÜR GLEITSCHIRM- UND HÄNGEGLEITERPILOTEN**

(30) Priorität: 04.02.2025 CH 962025; 21.07.2025 CH 7922025
(71) Anmelder: XC Tracer GmbH, 3011 Bern (CH)
(72) Erfinder: Schafroth, Konrad, 3011 Bern (CH)
(74) Vertreter: BOVARD AG

(57) **Zusammenfassung**

Verfahren zur Anzeige von Hillshading-Bildern auf einem Fluginstrument wobei basierend auf DEM-Daten ein anpassbares Hillshading-Bild berechnet wird. Die Erfindung bezieht sich zudem auf ein Fluginstrument zur Ausführung des erfindungsgemässen Verfahrens, wobei durch Kombination aus Parallelberechnungen oder Puffern, Dithering und DMA-gestützter Displayaktualisierung eine effiziente Nutzung der begrenzten Rechenressourcen in Echtzeit-Anwendungen wie der Navigation beim Gleitschirmfliegen möglich sind.

## Beschreibung

### Technisches Gebiet der Erfindung

Die Erfindung betrifft Fluginstrumente für Luftfahrzeuge wie Gleitschirme und Hängegleiter. Insbesondere geht es um die Integration und Darstellung von topographischen Daten, Wetter- und Windinformationen, die dynamische Anpassung der Hillshading-Bilder, eine effiziente Datenverwaltung sowie die Anzeige von Positionsdaten anderer Fluggeräte zur Verbesserung der Orientierung, Sicherheit und Entscheidungsfindung während des Flugs.

### Stand der Technik

Piloten von Gleitschirmen und Hängegleitern stehen bei der Navigation und der Suche nach Aufwinden unter wechselnden, oft turbulenten Bedingungen vor erheblichen Herausforderungen. Herkömmliche Fluginstrumente bieten oftmals nicht ausreichende Unterstützung, um Gelände, Aufwinde, andere Flugzeuge und potenzielle Gefahrenquellen effektiv zu visualisieren.

### Zusammenfassung der Erfindung

Die vorliegende Erfindung betrifft ein Verfahren zur Anzeige von Hillshading-Bildern auf einem Fluginstrument sowie ein entsprechendes Fluginstrument, das eine realitätsnahe, dynamische Topographieanzeige und die Integration zusätzlicher Fluginformationen ermöglicht, um die Sicherheit und Effizienz des Flugs zu erhöhen. Das erfindungsgemässe Fluginstrument weist ferner eine optimierte Speicherplatznutzung und Reaktionszeit auf. Die wesentlichen Merkmale umfassen:

Topographieanzeige mittels Hillshading:
- Verwendung digitaler Höhenmodelle (DEM-Daten) zur Darstellung von Gelände. Das erfindungsgemässe Verfahren erlaubt dabei eine Darstellung des Geländes in einer Aufsicht (vertikale Topographie) und/oder in einer seitlichen Ansicht (horizontale Topographie).
- Anwendung zumindest einer Hillshading-Technik auf die DEM-Daten
- Dynamische Anpassung der Hillshading-Darstellung durch Einbezug des Echtzeit-Sonnenstands für eine realitätsnahe Beleuchtungssimulation und/oder durch Anpassung weiterer Hillshading-Parameter.
- Zur Darstellung des Geländes in einer seitlichen Ansicht (horizontale Topographie) sind die DEM-Daten und die Hillshading-Darstellung entlang einer Achse, vorzugsweise entlang einer Sichtachse des Fluginstruments bzw. des Piloten, überlagerbar. Weiter vorzugsweise ist die Hillshading-Darstellung anhand der Position des Fluginstruments und anhand der DEM-Daten in für den Piloten sichtbare und für den Piloten nicht sichtbare Bereiche unterteilbar. Ein für den Piloten nicht sichtbarer Bereich der Hillshading-Darstellung kann beispielsweise ein Bereich sein, der durch eine zwischen dem Piloten und dem nicht sichtbaren Bereich liegende Erhebung verdeckt ist. Die Darstellung des Geländes in einer seitlichen Ansicht ist vorzugsweise auf die für den Piloten sichtbaren Bereiche reduzierbar, was die Speicherplatznutzung und Reaktionszeit des Fluginstruments weiter verbessert. In die seitliche Ansicht des Geländes sind zusätzliche Informationen, wie beispielsweise Flughöhe, Geschwindigkeit, Art der Flugbewegung (Steigflug/Sinkflug), gesperrte Lufträume, Angaben über Hindernisse oder andere Luftfahrzeuge, Angaben zur Orientierung, zum Beispiel in Form eines Kompass, einblendbar.

Integration von Wasserflächeninformationen:
- Erweiterung der DEM-Daten um ein Wasser-/Land-Bit, das anzeigt, ob ein bestimmter Punkt Wasser oder Land darstellt.
- Anpassung der Darstellung zur Hervorhebung von Wasserflächen zur besseren Orientierung und Sicherheitsplanung.

Benutzerdefinierte Anpassung der Hillshading-Parameter:
- Bereitstellung von Einstellungsoptionen für Piloten zur Veränderung von Hillshading-Parametern (z. B. Verstärkung des Sonnenlichteinfalls, Betonung steiler Hänge), Berücksichtigung Sonnenstand in Abhängigkeit von Uhrzeit und Position
- Dynamische Neuberechnung und visuelles Feedback, das die Anpassungen in Echtzeit widerspiegelt.

Effiziente DEM-Datenverwaltung:
- Speicherung komprimierter DEM-Daten-Tiles auf mobilen Geräten.
- Bedarfsorientiertes Entpacken von Daten basierend auf dem GPS-Standort, um Rechenressourcen und Speicherplatz optimal zu nutzen.
- Minimierung von Schreibvorgängen auf die Speicherkarte zur Verlängerung der Lebensdauer von Speichermedien.

Integration und Darstellung von Flugpositionsdaten:
- Empfang und Übertragung von Positionsdaten anderer Fluggeräte (z. B. über ADS-L, FANET, FLARM).
- Kombination dieser Positionsdaten mit topographischen Anzeigen zu kombinierten Positionsdaten zur Visualisierung anderer Flieger auf dem Geländeprofil.
- Nutzung der kombinierten Positionsdaten zur Identifikation von Aufwindquellen und zur Verbesserung der Flugroutenplanung.

Fernsteuerung zur Anzeigeanpassung:
- Einsatz eines Fernsteuerungssystems zur Bedienung des Fluginstruments und zur Umschaltung und Anpassung der Anzeigemodi (z. B. Hinzufügen von Talwinden, Anzeige von "Buddies"), insbesondere in turbulenten Situationen sowie zur Anpassung der Hillshading-Parameter.

Darstellung und Optimierung von Hillshading auf SW-Displays:
- Techniken auf schwarz-weißen Displays:
   Ohne Graustufen können Dithering-Verfahren (wie Ordered Dithering und Error Diffusion) sowie ergänzende Konturlinien genutzt werden, um unterschiedliche Helligkeitsstufen und Geländedetails darzustellen.
- Einfluss der Pixeldichte: Eine höhere Auflösung verbessert die Qualität des Dithering, da feinere Abstufungen und realistischere Reliefdarstellungen möglich sind.
- Für eine akzeptable Dithering-Qualität können vorzugsweise Displays mit 150-200 DPI eingesetzt werden, höhere DPI-Werte verbessern das Ergebnis weiter.

Prozessbeschreibung für ein Moving-Map-Hillshading-System mit minimaler Latenz:
Das erfindungsgemässe Verfahren kann einerseits von einer Recheneinheit, beispielsweise einem Microcontroller, mit einem einzelnen Prozessor, vorzugsweise einer CPU, oder einer Recheneinheit mit mehreren Prozessoren, vorzugsweise zumindest einer CPU und zumindest einer GPU, wobei die Schritte des Verfahrens auf die mehreren Prozessoren aufgeteilt werden und zumindest teilweise parallel erfolgen, ausgeführt werden.

Insofern das Verfahren auf einem einzelnen Prozessor ausgeführt wird, kommen zumindest ein erster grosser Tile-Buffer, ein zweiter grosser Tile-Buffer, ein kleinerer Framebuffer und eine Übertragungstechnik von Framebuffer zu einem Display, vorzugsweise in Form von Direct Memory Access (DMA)-Übertragungen sowie folgende Schritte zum Einsatz:
- Bereitstellen eines Hillshading-Bildes in dem ersten Tile Buffer.

Kopieren eines Bildausschnitts in den Framebuffer, Anwendung von Dithering und Einblendung zusätzlicher Informationen, wie beispielsweise Flughöhe, Geschwindigkeit, Art der Flugbewegung (Steigflug/Sinkflug), gesperrte Lufträume, Angaben über Hindernisse oder andere Luftfahrzeuge, Angaben zur Orientierung, zum Beispiel in Form eines Kompass.
- DMA-gestützte Übertragung, vorzugsweise mittels eines DMA Buffers, zum Display für flüssige Aktualisierungen.
- Parallelberechnung des nächsten Hillshading-Bildes im zweiten Tile Buffer.
- Austausch der Buffer oder Wechsel der Buffer zur Übertragung des Bildausschnitts an den Framebuffer und kontinuierliche Aktualisierung zur Gewährleistung geringer Latenz und ruckelfreier Darstellung.

Neben dem ersten und zweiten Tile Buffer sind weitere Tile Buffer vorsehbar, insbesondere sind ein oder mehrere weitere Tile Buffer zur Berechnung und Speicherung einer oder mehrerer Vergrösserungs- oder Reduktionsansichten (Zoomstufen) eines Hillshading-Bildes vorsehbar. Somit ist ein Wechsel zwischen den Zoomstufen willkürlich möglich, ohne dass je Wechsel der Zoomstufe eine Neuberechnung des zugrundeliegenden Hillshading-Bildes notwendig ist.

Durch die Kombination dieser Funktionen verbessert das Fluginstrument das Situationsbewusstsein, die Routenplanung und die Sicherheit der Piloten signifikant. Die dynamische Anpassungsfähigkeit und effiziente Datenverwaltung ermöglichen zudem eine ressourcenschonende Nutzung auf mobilen Geräten.

Wird das Verfahren auf mehrere Prozessoren, vorzugsweise zumindest eine CPU und zumindest eine GPU, aufgeteilt, ist der Framebuffer ausreichend und es sind keine Tile-Buffer zwingend notwendig, wobei die Recheneinheit ein Hillshading-Bild auf Basis von DEM-Daten berechnet und im Framebuffer speichert. Hierdurch werden weniger Speicherelemente bzw. Speicherplatz benötigt und durch die zumindest teilweise parallele Ausführung von Berechnungen auf den zumindest zwei Prozessoren dennoch die bereits benannten Vorteile erreicht.

Ebenfalls alternativ kann ein System verwendet werden, dass ein Funkmodul, eingerichtet zum Abrufen von DEM-Daten und/oder Tiles von einem Server umfasst, und wobei das Hillshading-Bild auf dem Server berechnet und dem System per kabelloser Übertragung wiederum zur Verfügung gestellt wird. Ein solches System reduziert den Rechen- und Speicheraufwand, der auf dem System selbst entsteht, setzt jedoch eine kabellose Verbindung zwischen System und Server voraus.

### Kurzbeschreibung der Zeichnungen

Es zeigen:

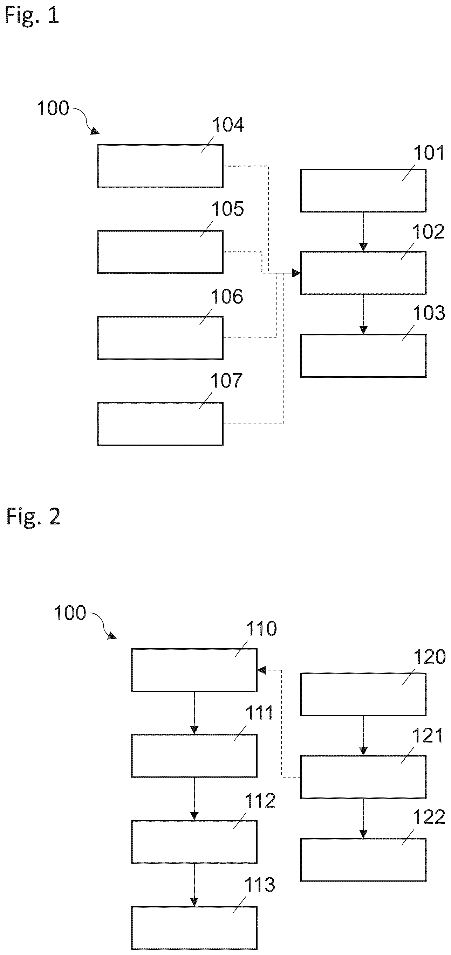

Figur 1 eine schematisch dargestellte Abfolge der Schritte des Verfahrens zur Anzeige von Hillshading-Bildern nach einer ersten Ausführungsform der Erfindung,
Figur 2 eine schematisch dargestellte Abfolge der Schritte des Verfahrens zur Anzeige von Hillshading-Bildern nach einer zweiten Ausführungsform der Erfindung,

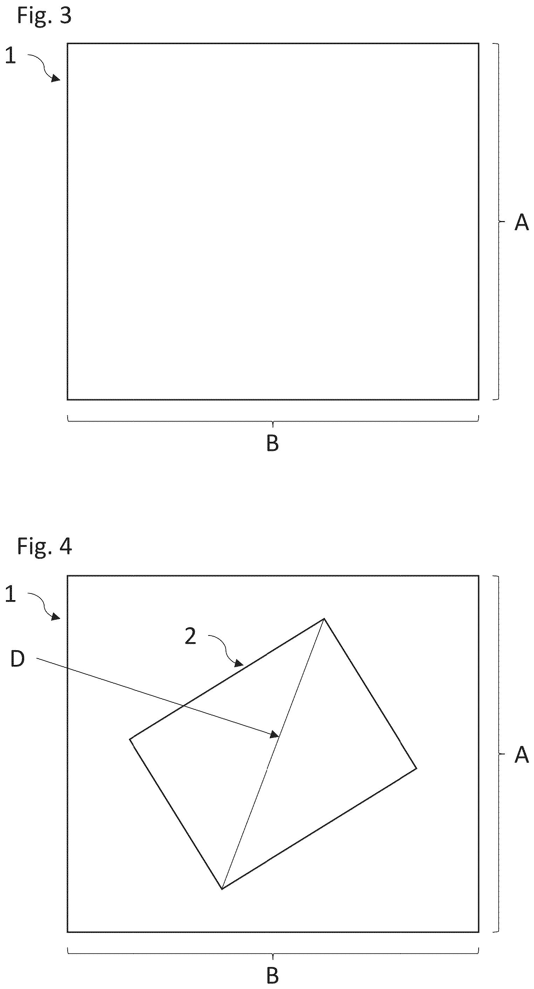

Figur 3 eine schematische Ansicht des achten Hillshading-Bilds,
Figur 4 eine schematische Ansicht des Ausschnitts aus dem achten Hillshading-Bild entsprechend einer Position und Blickrichtung,

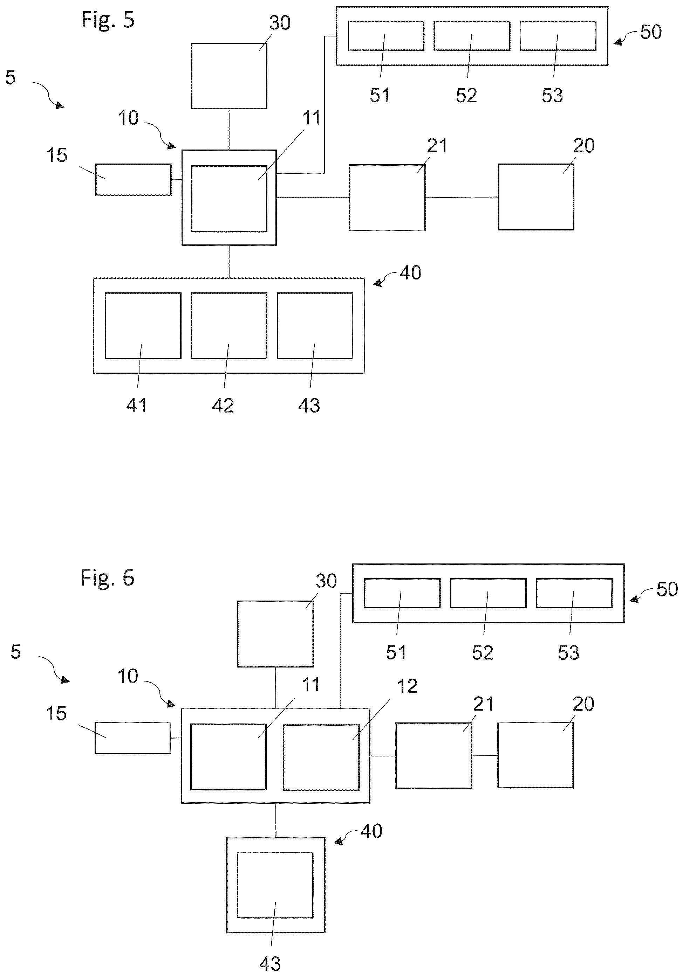

Figur 5 eine schematische Darstellung der Komponenten eines Fluginstruments gemäss einer ersten Ausführung der Erfindung, und
Figur 6 eine schematische Darstellung der Komponenten eines Fluginstruments gemäss einer zweiten Ausführung der Erfindung.

### Bevorzugte Ausführungsformen der Erfindung

### 1. Topographieanzeige und Hillshading:

Die Anzeige der Topographie auf dem Fluginstrument kann beim Gleitschirmfliegen aus mehreren Gründen sehr hilfreich sein:
Orientierung und Situationsbewusstsein: Eine Topografieanzeige gibt einen schnellen Überblick über die umliegenden Geländemerkmale wie Berge, Täler und Hügel. Dadurch behält der Pilot leichter die Orientierung und versteht, wie sich die Umgebung strukturell darstellt.

Thermik- und Windverhältnisse: Topografische Merkmale beeinflussen die Bildung von Aufwinden und Turbulenzen. Ein Überblick über das Gelände hilft dem Piloten einzuschätzen, wo sich Thermik entwickelt oder Aufwinde bilden könnten - etwa durch Hangaufwinde an Bergrücken - sowie zu erkennen, wo potenzielle Windböen oder Turbulenzen auftreten können.

Talwindsysteme: Täler können eigene Windmuster entwickeln, bekannt als Talwindsysteme. Diese entstehen oft durch die Wechselwirkung von globalen oder lokalen Winden mit dem Geländeverlauf. Zum Beispiel können tagsüber durch Sonneneinstrahlung im Tal aufsteigende Warmluftströme und abends umgekehrt durch absinkende, kühlere Luftströmungen charakteristische Windmuster entstehen. Solche Talwinde können den Flug beeinflussen - sie bieten möglicherweise stetige, vorhersehbare Winde für längere Gleitphasen oder erzeugen plötzliche Böen und Turbulenzen. Die Anzeige der Topografie hilft Piloten, diese Windmuster besser zu verstehen, indem sie sehen, wie sich die Luftströmungen im Tal entlang der Geländestruktur entwickeln könnten. Damit können sie vorausschauend planen und auf wechselnde Wetterbedingungen im Tal reagieren.

Risikominimierung: Mit genauen Geländeinformationen kann der Pilot gefährliche Bereiche wie steile Abhänge, Senken, Wälder oder Hindernisse besser einschätzen und vermeiden. Dies trägt zur Flug- und Landesicherheit bei.

Landemöglichkeiten: Eine Topografieanzeige hilft dabei, geeignete Landeplätze oder Notlandungszonen zu erkennen, insbesondere in unerwarteten Situationen. Der Pilot kann rechtzeitig alternative Landegebiete planen, wenn etwa das Wetter umschlägt oder sich die Flugbedingungen ändern.

Planung und Navigation: Die Kenntnis der Topografie unterstützt die Flugrouteplanung. Piloten können Strecken gezielt wählen, um von vorteilhaften thermischen Bedingungen zu profitieren, weniger turbulente Passagen zu fliegen und sicherere Routen zu identifizieren.

Hindernisse: In einer zusätzlichen Datenbank können Hindernisse wie beispielsweise Kabel gespeichert werden. Diese Daten kann dann auch in der Topographie / Hillshading angezeigt werden, so dass der Pilot auf potentielle Gefahren aufmerksam gemacht wird.

Zusammengefasst: Die Integration von Topografie in das Instrumentendisplay verbessert das Situationsbewusstsein, hilft bei der Entscheidungsfindung - auch in Bezug auf Talwindsysteme und trägt zu mehr Sicherheit und Effizienz während des Gleitschirmflugs bei.

Die Darstellung von Topografie mittels Hillshading folgt zwar allgemein anerkannten kartografischen Praktiken, jedoch gibt es keine einheitliche, weltweit verbindliche Norm, die für alle Anwendungen vorschreibt, wie Hillshading exakt umzusetzen ist. Es existieren aber Richtlinien, Standards und bewährte Verfahren, die häufig angewendet werden:

### 1. Allgemeine Konventionen:

- Lichtquelle: Häufig wird die Lichtquelle aus Nordwesten simuliert, oft in einem Winkel von etwa 45° über dem Horizont. Diese Konvention sorgt dafür, dass die meisten Betrachter die Erhebungen und Senken intuitiv als solche erkennen.
- Schattierung: Die Intensität der Schattierung variiert mit der Neigung und Ausrichtung des Geländes. Heller schattierte Flächen deuten auf Anstiege oder zur Lichtquelle hin ausgerichtete Flächen, während dunklere Bereiche in der Regel Abhänge oder von der Lichtquelle abgewandte Flächen markieren.

### 2. Standards und Richtlinien:

- Kartografische Standards: Organisationen wie die International Cartographic Association (ICA) veröffentlichen Richtlinien für Kartographie, die auch Empfehlungen für die Hillshading-Techniken enthalten können. Ebenso geben nationale geographische Institute (z. B. das US Geological Survey - USGS) Standards für die Erzeugung von Geländemodellen und deren Schattierungsdarstellungen heraus.
- Technische Standards: Im Bereich der Geodatenverarbeitung bieten Standards wie die von der Open Geospatial Consortium (OGC) beschriebene Web Map Service (WMS)-Spezifikation Mechanismen für die Darstellung von Geländeshattierung im Rahmen geospatialer Webdienste. Zwar regelt dies nicht die genauen Darstellungsparameter von Hillshading, jedoch garantiert es Kompatibilität und Standardisierung bei der Datenbereitstellung und - abfrage.

### 3. Software und Implementierungen:

- Viele GIS- und Kartenanwendungen (wie QGIS, ArcGIS, Google Earth) verwenden standardisierte Methoden und Parameter für Hillshading, die sich an den oben genannten Konventionen orientieren. Dabei kann der Benutzer oft Parameter wie Lichtwinkel, Schattenintensität oder Höhenexaggeration anpassen, um die Visualisierung an seine Bedürfnisse anzupassen.

### 4. Regionale bzw. projektspezifische Vorgaben:

- In manchen Anwendungen oder Projekten können spezifische Vorgaben existieren, die z. B. den Lichtwinkel oder die Farbskala festlegen, um konsistente Darstellungen über mehrere Karten hinweg sicherzustellen. Diese basieren oft auf den Anforderungen des jeweiligen Einsatzbereichs und werden von Kartographen oder Organisationen definiert.

Während es keine streng verbindlichen, universellen Normen für Hillshading gibt, orientiert man sich an etablierten kartografischen Praktiken und spezifischen Richtlinien nationaler oder internationaler Organisationen. Diese bewährten Verfahren gewährleisten, dass die Darstellung der Topografie durch Hillshading für den Nutzer nachvollziehbar und konsistent ist.

Die Anzeige von Topographie auf mobilen Geräten stützt sich auf verschiedene geographische und Höhenbezogene Daten sowie auf spezielle Rendering-Techniken, um Geländeinformationen effizient darzustellen. Im Folgenden ein Überblick über die genutzten Datenquellen und Methoden:

### 1. Digitale Höhenmodelle (Digital Elevation Models, DEM)

- Grundlage: DEMs liefern für jedes Punktgitter Informationen über die Höhe über dem Meeresspiegel. Bekannte globale DEM-Datensätze sind zum Beispiel der Shuttle Radar Topography Mission (SRTM) oder ASTER GDEM.
- Quelle: Diese Daten können von Regierungsbehörden, Satellitenmissionen oder privaten Anbietern stammen und werden entweder direkt auf dem Gerät gespeichert oder über das Internet abgerufen.

Vorzugsweise dienen DEM-Daten als Basis für die Berechnung eines anpassbaren Hillshading-Bilds. Es ist jedoch auch denkbar, dass basierend auf DEM-Daten vorberechnete Datenwerte, beispielsweise ein oder mehrere Neigungswerte oder ein oder mehrere Normalenvektoren in Verbindung mit einer Orientierung nach den Himmelsrichtungen, berechnet werden und ein anpassbares Hillshading-Bild basierend auf diesen vorberechneten Datenwerten berechnet wird. Alle im Folgenden beschriebenen, auf Basis von DEM-Daten ausgeführten, Berechnungen können auch auf Basis von vorberechneten Datenwerten durchgeführt werden.

Vorberechnete Datenwerte sind aus DEM-Daten berechenbar. Zum Beispiel kann zur Berechnung eines Neigungswerts aus vier DEM-Datenpunkten eine Neigung in einer ersten Richtung und eine Neigung in einer zweiten Richtung berechnet werden. Eine vorberechneter Datenwert für eine Position, die zwischen der Position eines ersten vorberechneten Datenwerts und der Position eines zweiten vorberechneten Datenwerts liegt, kann durch Interpolation, vorzugsweise durch bilineare Interpolation, berechnet werden.

Die Berechnung der vorberechneten Datenwerte kann vorzugsweise auf einem Server, einem Heim-PC, oder einem vergleichbaren externen Gerät durchgeführt und die so berechneten vorberechneten Datenwerte einem mobilen Gerät zur Verfügung gestellt werden, sodass lokal auf dem mobilen Gerät weniger oder weniger aufwendige Rechenoperationen durchgeführt werden müssen.

Alternativ können bei der Berechnung eines ersten Hillshading-Bilds vorberechnete Datenwerte lokal auf dem mobilen Gerät berechnet und das Ergebnis der Berechnung lokal gespeichert werden, sodass für eine Berechnung weiterer Hillshading-Bilder auf diese vorberechneten Datenwerte zurückgreifbar und der Rechenaufwand damit reduzierbar ist.

Im Falle von Neigungswerten als vorberechnete Datenwerte können Höhenwerte direkt aus den DEM-Daten ausgelesen werden, sodass das mobile Gerät die Höhe über Grund ausgehend von einer erfassten Position über einem Gelände bestimmen kann. Im Falle von Normalenvektoren als vorberechnete Datenwerte kann ein Höhenwert aus den Einzelkomponenten des Normalenvektors berechnet werden.

### 2. Geländedarstellungstechniken

- Hillshading: Mit Hilfe von DEM-Daten werden Schattenwürfe (Hillshading) berechnet, um Höhenunterschiede visuell hervorzuheben. Dabei wird die simulierte Lichtquelle (meist standardisiert aus einer bestimmten Richtung) genutzt, um Licht- und Schatteneffekte darzustellen.
- Konturlinien und Farbverläufe: Zusätzlich zur Schattierung werden oft Konturlinien oder farbliche Höhenstufen verwendet, um das Relief hervorzuheben.

### 3. Datenformate und -quellen für mobile Anwendungen

- Rastertiles: Viele Karten-Apps nutzen vorgerenderte Rasterkarten- oder Geländetiles, die bereits im Vorfeld die Hillshading-Daten enthalten. Diese Tiles werden auf Servern gespeichert und bei Bedarf auf das mobile Gerät geladen.
- Webservices: APIs und Web Map Services (WMS) liefern dynamische Geländedarstellungen in Echtzeit. Dabei werden georeferenzierte Bilder oder Tiles von Servern gestreamt, die DEMbasierte Hillshading oder andere topographische Visualisierungen enthalten.

### 4. Lokale Speicherung und Caching

- Offline-Nutzung: Viele Apps bieten die Möglichkeit, Topographiedaten für bestimmte Regionen vorab herunterzuladen und lokal zu speichern. Das kann Rasterkarten (z. B. GeoTIFFs) oder komprimierte Tiles umfassen.
- Caching-Mechanismen: Um Bandbreite und Ladezeiten zu optimieren, werden häufig heruntergeladene Geländetiles oder DEM-Daten zwischengespeichert.

### 5. Rendering auf mobilen Geräten

- Grafik-Engines: Mobile Betriebssysteme und Apps nutzen Grafikbibliotheken (wie OpenGL ES, Metal, Vulkan) zur effizienten Darstellung von Geländemodellen, Hillshading und interaktiven 3D-Ansichten.
- Software-Optimierung: Da mobile Geräte begrenzte Ressourcen haben, werden Rendering-Prozesse und Datenabfragen oft so optimiert, dass nur der aktuell benötigte Ausschnitt der Topographie geladen und berechnet wird.

Wenn ein digitales Höhenmodell (DEM) lokal auf einem Gerät, beispielsweise einem Fluginstrument, gespeichert ist und zur Erzeugung einer realitätsnahen Hillshading-Darstellung verwendet werden soll, kann der Stand der Sonne in Echtzeit berücksichtigt werden. Dadurch ergibt sich eine Schattierung, die der tatsächlichen Beleuchtung der Landschaft zur angegebenen Zeit und Position sehr ähnlich ist. Im Folgenden wird der Prozess detailliert beschrieben:

### 1. Speicherung und Nutzung des DEM

### • Lokale Speicherung des DEM:

Das Gerät speichert ein digitales Höhenmodell (DEM) für den relevanten geografischen Bereich. Das DEM enthält für jedes Rasterpunktgitter Höheninformationen über dem Meeresspiegel. Diese Daten werden direkt auf dem Gerät abgelegt, um einen schnellen Zugriff und eine unabhängige Offline-Nutzung zu ermöglichen.

### • Zugriff auf DEM-Daten:

Für die Hillshading-Berechnungen liest die Anwendung die Höhenwerte aus dem DEM. Diese Werte bilden die Grundlage für die Berechnung von Gefälle (Steigungen) und Geländeneigung in verschiedene Richtungen. Sollten für eine bestimmte Position kein Höhenwert vorliegen, kann aus zumindest zwei dieser Position naheliegenden Höhewerten ein Höhewert für diese Position interpoliert werden.

### 2. Berechnung des Sonnenstands

### • Eingangsparameter:

Der Sonnenstand wird aus den geografischen Koordinaten (Breitengrad und Längengrad) des Betrachtungspunktes sowie der aktuellen Zeit in UTC und des Datums berechnet.

### • Astronomische Berechnungen:

Mithilfe von Algorithmen zur Sonnenpositionsbestimmung - etwa unter Verwendung von Formeln aus der Astronomie oder Bibliotheken wie NOAA's Solar Calculator oder Astropy - wird der Azimutwinkel und die Höhe (Elevation) der Sonne am gegebenen Ort und Zeitpunkt ermittelt.
∘ Azimutwinkel: Gibt die horizontale Richtung der Sonne relativ nach Norden an.
∘ Sonnenhöhe: Gibt an, wie hoch die Sonne über dem Horizont steht.

### 3. Dynamisches Hillshading unter Berücksichtigung des Sonnenstandes

### • Berechnung des Geländes in Bezug auf Licht:

Anhand der DEM-Daten wird für jede Zelle oder Pixel im Höhenmodell die Ausrichtung der Oberfläche (Neigungswinkel und Richtung) berechnet. Dies erfolgt häufig durch Ermittlung der Gradienten in Ost-West- und Nord-Süd-Richtung und daraus resultierende Steigungs- und Azimutwerte.

### • Lichtwinkelanpassung:

Anstatt einen festen Lichtwinkel (z. B. 45° Nordwesten) zu verwenden, wird nun der tatsächliche Sonnenstand herangezogen. Der berechnete Azimut- und Elevationswinkel der Sonne ersetzt die standardisierten Werte.

### • Schattierungsberechnung:

Für jedes Pixel wird die Intensität der Beleuchtung basierend auf dem Winkel zwischen der Oberflächennormalen (aus DEM abgeleitet) und der Richtung zur Sonne bestimmt.
∘ Ist die Fläche direkt von der Sonne angestrahlt, erscheint sie heller.
∘ Flächen, die im Schatten liegen (wenn die Sonne hinter einem Geländehügel steht oder der Einfallswinkel niedrig ist), erhalten eine dunklere Schattierung.

### • Berücksichtigung von Atmosphäreneffekten (optional):

Für noch realistischere Darstellungen können Effekte wie Dämpfung des Sonnenlichts durch die Atmosphäre bei niedrigen Sonnenhöhen oder Farbveränderungen (goldene Stunde) einbezogen werden.

### 4. Darstellung auf dem Gerät

### • Rendering-Prozess:

Die berechneten Helligkeitswerte für jedes Pixel werden als Graustufen- oder farbige Schattierungswerte auf das Display gemappt. Dadurch entsteht ein Bild, das das Relief der Landschaft unter der aktuellen Sonnenbeleuchtung simuliert (Hillshading-Bild).

### • Interaktivität und Aktualisierung:

Bei Änderungen der Zeit (z. B. fortschreitende Stunde), Position oder Blickrichtung des Betrachters kann die App die Sonnenstandberechnung und somit das Hillshading dynamisch neu berechnen, um eine stets realitätsnahe Darstellung zu gewährleisten. Alle Parameter zur Berechnung des Hillshading-Bild können jedoch auch von einem Benutzer des Fluginstruments manipuliert werden, beispielsweise um ein bestimmtes Hillshading-Bild zu einer gegebenen Uhrzeit zu simulieren und/oder das Hillshading an individuelle Bedürfnisse anzupassen.

Der Prozess umfasst die lokale Speicherung eines DEM und die Berechnung des Sonnenstandes aus Latitude, Longitude und UTC-Zeit. Diese Informationen fließen in die Hillshading-Algorithmik ein, indem sie als Lichtquelle zur Berechnung von Licht- und Schatteneffekten auf dem Gelände dienen. Das Ergebnis ist eine topographische Darstellung auf dem Fluginstrument, die der tatsächlichen Beleuchtung der Landschaft zum gegebenen Zeitpunkt sehr nahekommt - was die Orientierung und das Verständnis der Umgebung für den Benutzer erheblich verbessert.

Erfindungsgemäss ist vorgesehen, die Berechnung des Sonnenstandes und das dynamische Hillshading unter Berücksichtigung des Sonnenstandes unter Verwendung von auf dem Fluginstrument lokal gespeicherten DEM-Daten auf einer von dem Fluginstrument umfassten Recheneinheit auszuführen. Auf diese Weise ist das Fluginstrument unabhängig von der Verfügbarkeit von Funkverbindungen. Es ist jedoch auch denkbar, einen oder mehrere dieser Schritte ganz oder teilweise auf einem Server auszuführen und das jeweilige Ergebnis dem Fluginstrument über eine drahtlose Verbindung bereitzustellen um beispielsweise Beschränkungen hinsichtlich des lokalen Speicherplatz und/oder der Rechenleistung zu umgehen.

Die Integration von Wasserinformationen direkt in ein bestehendes DEM-Modell ermöglicht eine effizientere Nutzung der Daten auf mobilen Geräten, insbesondere für Anwendungen wie das Gleitschirmfliegen, bei dem die Kenntnis von Wasserflächen wichtig ist. Statt eine separate Datenbank für Wasserflächen (Water Body Model) zu führen, kann ein zusätzliches Bit pro Geländepunkt im DEM verwendet werden, um anzuzeigen, ob dort Wasser oder Land vorhanden ist. Hier eine Beschreibung, wie dies umgesetzt und genutzt werden kann:

### 1. Erweiterung des DEM-Datenmodells

### • Zusätzliche Bit-Information:

Jedes Datenpunkt-Element im DEM wird um ein einzelnes Bit erweitert:
∘ Bit-Wert 0: Der Punkt repräsentiert Land.
∘ Bit-Wert 1: Der Punkt befindet sich auf einer Wasserfläche.

### • Speicherstruktur:

∘ In einem typischen DEM ist jeder Punkt bereits mit einem Höhenwert (z. B. als 16- oder 32-Bit-Ganzzahl oder Fließkommazahl) verknüpft.
∘ Um das zusätzliche Wasser/Land-Flag zu speichern, kann entweder ein freies Bit in der bestehenden Speicherstruktur genutzt oder die Datenstruktur um zusätzliche Bitfelder erweitert werden.
∘ Falls die Höhenwerte beispielsweise als 32-Bit-Gleitkommazahlen vorliegen, könnte man den niedrigsten oder höchsten Bitbereich reservieren oder eine separate Struktur neben dem Höhenwert verwenden, um das Wasserflag abzuspeichern.

### 2. Ermittlung und Integration der Wasserflächen

### • Vorverarbeitung der Daten:

∘ Mit Hilfe von bestehenden hydrologischen Karten oder Satellitendaten kann im Vorfeld bestimmt werden, welche Punkte im DEM Wasserflächen darstellen.
∘ Ein Algorithmus liest das ursprüngliche DEM aus, vergleicht die Höhenwerte oder zusätzliche Oberflächenmerkmale (wie Glättung an Ufern) mit bekannten Wasseroberflächen und setzt entsprechend das Wasserbit.
∘ Alternativ lässt sich aus externen Wasserflächen-Vektordaten (z.B. Fluss- und Seenkarten) der Höhen-Gitterpunkten das Wasserflag zuordnen, sofern diese in dem betreffenden Bereich liegen.

### • Integration ins DEM:

Nach der Ermittlung wird das DEM so gespeichert, dass an jedem Punkt neben dem Höhenwert auch das Wasserbit abgespeichert ist. Dies geschieht als vorbereiteter Schritt, bevor die Daten auf das mobile Gerät geladen oder für die App aufbereitet werden.

### 3. Nutzung der integrierten Wasserinformationen im Rendering-Prozess

### • Visualisierung von Wasserflächen:

Beim Erzeugen der topographischen Darstellung (z. B. Hillshading) kann zusätzlich zur Höheninformation überprüft werden, ob ein bestimmter Punkt als Wasser markiert ist.
∘ Farbgebung/Maskierung: Bereiche mit dem Wasserbit auf "1" können in der Darstellung anders gefärbt oder texturiert werden (z. B. blauer Farbton), um Wasserflächen kenntlich zu machen.
∘ Physikalische Effekte: Der Hillshading-Algorithmus könnte für Wasserflächen andere Schattierungs- bzw. Glanzlichter berücksichtigen, um beispielsweise Spiegelungen oder glatte Oberflächen darzustellen.

### • Navigation und Sicherheitsaspekte:

Insbesondere beim Gleitschirmfliegen kann das Fluginstrument Wasserflächen hervorheben, um Piloten auf potenzielle Landeplätze oder Gefahrenzonen aufmerksam zu machen, ohne eine separate Wasser-Datenbank durchsuchen zu müssen.

### 4. Vorteile der Integration

### • Speichereffizienz:

Durch die Integration des Wasserbits direkt in das DEM entfällt die Notwendigkeit einer separaten Datenbank für Wasserflächen. Dies spart Speicherplatz und vereinfacht den Datenzugriff.

### • Geschwindigkeit und Performance:

Da alle Informationen (Höhen- und Wasserinformationen) in einer einzigen Datenstruktur vorliegen, können Zugriffe und Abfragen schneller erfolgen, was insbesondere für Echtzeitanwendungen auf mobilen Geräten vorteilhaft ist.

### • Konsistenz der Daten:

Wasser- und Höhendaten sind synchronisiert, da sie aus derselben Quelle stammen und gemeinsam verwaltet werden. Änderungen oder Updates betreffen beide Datentypen gleichzeitig, was die Datenintegrität erhöht.

Durch die Ergänzung eines einzelnen Bits im DEM, das angibt, ob es sich bei einem bestimmten Punkt um Wasser oder Land handelt, können Wasserflächeninformationen effizient in die vorhandenen Geländedaten integriert werden. Diese Methode ermöglicht es, auf mobilen Geräten ohne zusätzlichen Speicher- oder Rechenaufwand wasserbezogene Informationen direkt aus dem DEM abzurufen und in Echtzeit darzustellen, was für sicherheitsrelevante Anwendungen wie das Gleitschirmfliegen von großem Vorteil ist.

Gemäß der Erfindung ist das Verfahren zur Anzeige von Hillshading-Bildern auf einem Fluginstrument anpassbar, was dem Benutzer erlaubt, Parameter des Hillshading-Algorithmus individuell zu verändern. Dadurch kann der Einfluss der Sonnenstrahlung, die Darstellung von Geländeneigungen und andere visuelle Aspekte an die Bedürfnisse des Nutzers angepasst werden. Im Folgenden wird beschrieben, wie solche Einstellungen implementiert und genutzt werden können:

### 1. Benutzerdefinierte Parameter im Hillshading

Das Fluginstrument bietet ein Menü oder Einstellungsbereich, in dem der Benutzer verschiedene Parameter des Hillshading anpassen kann. Beispiele für solche Parameter sind:

### • Verstärkung des Sonnenlichteinfalls:

Der Benutzer kann einstellen, wie stark der Sonnenstand die Schattierung beeinflusst. Eine erhöhte Verstärkung lässt Bereiche, die direkt von der Sonne getroffen werden, heller erscheinen und betont Schattenbereiche intensiver. Dies kann hilfreich sein, um Details im Gelände besser zu erkennen.

### • Neigungsbetonung:

Eine Einstellung ermöglicht es dem Nutzer, die Darstellung von steilen Hängen zu intensivieren. Wenn aktiviert, werden steile Geländebereiche dunkler dargestellt, selbst wenn sie von der Sonne beleuchtet sind. Dies betont die topographische Neigung und hilft Piloten, insbesondere bei der Flugplanung, scharfe Gefälle und potenzielle Hindernisse besser zu identifizieren.

### • Anpassung der Lichtquelle und Schattenintensität:

Der Benutzer kann Parameter wie Lichtwinkel, Helligkeit und Kontrast einstellen, um die Darstellung an verschiedene Lichtverhältnisse oder persönliche Vorlieben anzupassen.

### 2. Technische Umsetzung der Einstellmöglichkeiten

### • Parameter-Schnittstelle:

Im Einstellungsmenü des Fluginstruments werden Regler, Schieberegler oder Auswahlfelder bereitgestellt, über die der Nutzer die gewünschten Anpassungen vornehmen kann. Diese Eingaben werden in Variablen oder Parameterüberschriften innerhalb der Hillshading-Algorithmus-Engine gespeichert.

### • Dynamische Neuberechnung:

Sobald der Benutzer eine Einstellung ändert, wird der Hillshading-Algorithmus dynamisch neu konfiguriert. Der neue Parameterwert beeinflusst die Berechnung der Licht- und Schattierungsintensitäten, ohne dass das gesamte DEM neu geladen werden muss. Beispielsweise:
∘ Erhöhter Sonneneinfluss: Der Algorithmus multipliziert die Helligkeitskomponenten stärker mit den Berechnungen aus dem Sonnenpositionswinkel.
∘ Neigungsfokus: Der Algorithmus überprüft zusätzlich die Steilheit eines Geländepunktes und reduziert dessen Helligkeit proportional zur Hangneigung, um steile Bereiche dunkler darzustellen.

### • Visuelles Feedback:

Die Anpassungen wirken sich unmittelbar auf die Karte oder den Geländebereich aus, den der Benutzer betrachtet. Dadurch kann der Nutzer in Echtzeit sehen, wie sich Änderungen auf die Visualisierung auswirken und die Einstellungen entsprechend feinjustieren.

### 3. Vorteile und Anwendungsszenarien

### • Individuelle Anpassung:

Unterschiedliche Nutzer haben verschiedene Bedürfnisse. Ein erster Gleitschirmflieger könnte beispielsweise mehr Wert auf die genaue Erkennung steiler Abhänge legen, während ein zweiter Gleitschirmflieger andere Aspekte bevorzugt. Die Anpassungsmöglichkeiten erlauben es, die Darstellung der Topografie optimal auf den jeweiligen Einsatzzweck zuzuschneiden.

### • Erhöhte Situationsbewusstheit:

Durch die Anpassung der Schattierungseffekte kann der Benutzer bestimmte Geländecharakteristiken hervorheben, was das Situationsbewusstsein verbessert. Ein verstärkter Sonneneinfluss kann helfen, die Tageszeit oder Lichtverhältnisse zu simulieren, während die Betonung von Neigungen für die Navigation und Gefahrenerkennung nützlich ist.

### • Flexibilität bei unterschiedlichen Lichtverhältnissen:

In unterschiedlichen Tageszeiten oder Wetterbedingungen kann der Benutzer die Einstellungen so modifizieren, dass die Darstellung trotz variierender Realbeleuchtung konsistent und informativ bleibt.

Die Erfindung ermöglicht es dem Benutzer, Hillshading-Parameter an seine individuellen Bedürfnisse anzupassen. Durch Einstellungen wie die Verstärkung des Sonnenlichteinfalls oder die Betonung von steilen Hängen wird die visuelle Darstellung des Geländes flexibel und benutzerorientiert gestaltet. Diese Anpassbarkeit führt zu einer realitätsnäheren Simulation der Umgebung und verbessert die Nutzung der Anwendung für sicherheitsrelevante und präzise Anforderungen, etwa beim Gleitschirmfliegen.

Alternativ zu einer individuellen Anpassung der Hillshading-Parameter ist es auch denkbar, voreingestellte Hillshading-Parameter zu verwenden (automatisches Hillshading). Vorzugsweise können DEM-Daten in mehrere Teilbereiche unterteilt und für einen oder mehrere Teilbereiche voreingestellte Hillshading-Parameter verwendet werden. Die voreingestellten Hillshading-Parameter können bei mehreren Teilbereichen für die Teilbereiche unterschiedlich sein. Vorzugsweise sind voreingestellte Hillshading-Parameter derart ausgewählt, dass ein Kompromiss aus Darstellung der Topographie für einen Einsatzzweck und der für die Berechnung der Darstellung benötigten Rechenzeit erreicht wird.

Eine Einteilung in mehrere Teilbereiche kann beispielsweise auf Basis einer durchschnittlichen Neigung des Geländes oder auf Basis von Höhendifferenzen erfolgen. Vorzugsweise wird eine Teilmenge der DEM-Daten, beispielsweise jeder fünfte oder jeder zehnte Datenpunkt der DEM-Daten zur Bestimmung einer durchschnittlichen Neigung oder einer Höhendifferenz berücksichtigt, was eine besonders schnelle Bestimmung von Teilbereichen ermöglicht. Die voreingestellten Hillshading-Parameter werden vorzugsweise entsprechend der durchschnittlichen Neigung oder Höhendifferenz ausgewählt.

Ferner ist eine Kombination einer individuellen Anpassung der Hillshading-Parameter mit voreingestellten Hillshading-Parametern denkbar, wobei beispielsweise vom Nutzer individuell angepasste Hillshading-Parameter oberhalb eines Grenzwerts einer Neigung und unterhalb dieses Grenzwerts voreingestellte Hillshading-Parameter verwendet werden können. Auf diese Weise kann der Nutzer das Hillshading in für sich interessanten Teilbereichen, beispielsweise besonders steilen Abschnitten eines Geländes, individuell anpassen und in für sich weniger interessanten Teilbereiche, beispielsweise einer ebenen Fläche, auf voreingestellte Hillshading-Parameter zurückgreifen.

### • Darstellung des Geländes in einer seitlichen Ansicht (horizontale Topographie):

Alternativ oder zusätzlich zu einer Darstellung des Geländes in einer Aufsicht (vertikale Topographie) ist eine Darstellung des Geländes in einer seitlichen Ansicht (horizontale Topographie) möglich. Hierzu sind die DEM-Daten und die Hillshading-Darstellung entlang einer Achse, vorzugsweise entlang einer Sichtachse des Fluginstruments bzw. des Piloten, überlagerbar.

Vorzugsweise wird jeweils an vordefinierten Abtastpunkten entlang der Achse der Hillshading-Darstellung eine Höhe zugewiesen. Die mit Höheninformationen ergänzte Hillshading-Darstellung erlaubt die Darstellung des Geländes in einer seitlichen Ansicht in Form einer dreidimensionalen Projektion, wobei die Schattierungen der Hillshading-Darstellung erhalten bleiben. Weiter vorzugsweise sind die Abtastpunkte mit von der Position des Fluginstruments wegführend progressiv zunehmender Schrittweite definiert, sodass in einem Nahbereich um das Fluginstrument eine detaillierte Auflösung bei gleichzeitiger Darstellung eines breiten Distanzbereich um die Position des Fluginstruments erreichbar ist.

Weiter vorzugsweise ist die Hillshading-Darstellung anhand der Position des Fluginstruments und anhand der DEM-Daten in für den Piloten sichtbare und für den Piloten nicht sichtbare Bereiche unterteilbar. Ein für den Piloten nicht sichtbarer Bereich der Hillshading-Darstellung kann beispielsweise ein Bereich sein, der durch eine zwischen dem Piloten und dem nicht sichtbaren Bereich liegende Erhebung verdeckt ist. Die Darstellung des Geländes in einer seitlichen Ansicht ist vorzugsweise auf die für den Piloten sichtbaren Bereiche reduzierbar, was die Speicherplatznutzung und Reaktionszeit des Fluginstruments weiter verbessert. Die Unterteilung in sichtbare und nicht sichtbare Bereiche ist anpassbar, insbesondere an die Position des Fluginstruments anpassbar. So können beispielsweise bei einer grösseren Höhe über dem Gelände Bereiche für den Piloten sichtbar sein, die bei einer niedrigeren Höhe über Grund nicht sichtbar sind. Die seitliche Ansicht ist entsprechend um hinzukommende oder wegfallende sichtbare Bereiche erweiterbar bzw. reduzierbar.

In die seitliche Ansicht des Geländes sind zusätzliche Informationen, wie beispielsweise Flughöhe, Geschwindigkeit, Art der Flugbewegung (Steigflug/Sinkflug), gesperrte Lufträume, Angaben über Hindernisse oder andere Luftfahrzeuge, Angaben zur Orientierung, zum Beispiel in Form eines Kompass, einblendbar.Prinzip der effizienten DEM-Datenverwaltung und -Entpackung

Die Herausforderung besteht darin, große Mengen an Digitalen Höhenmodellen (DEM) für potenziell relevante Gebiete effizient auf einem mobilen Gerät zu speichern und zugänglich zu machen, ohne den verfügbaren Speicherplatz und die Lebensdauer der Speichermedien wie SD-Karten übermäßig zu belasten. Das beschriebene Prinzip kombiniert Datenkompression, räumliche Nähe und strategisches Entpacken, um optimale Leistung und Ressourcennutzung zu gewährleisten:

### 1. Ausgangslage: Komprimierte DEM-Daten-Tiles

### • Speicherbegrenzungen:

Aufgrund begrenzter Speicherkapazität ist es nicht möglich, alle DEM-Daten unkomprimiert zu speichern. Daher werden die Daten komprimiert gehalten, bis sie benötigt werden. Durch Kompression ist die Gesamtgröße der Daten reduziert und passt auf handelsübliche Speicherkarten.

### 2. Dynamisches Entpacken basierend auf GPS-Standort

### • GPS-Fix als Auslöser:

Sobald das Fluginstrument einen GPS-Fix erhält, ermittelt es seine aktuelle Position in Echtzeit.

### • Überprüfung des Umkreises:

Das System prüft, ob sich unkomprimierte DEM-Tiles für einen vordefinierten Radius um die aktuelle Position (z. B. 300 km) bereits auf der SD-Karte befinden.

### 3. Bedarfsorientiertes Entpacken

### • Kein passendes unkomprimiertes Tile gefunden:

Wenn im definierten Umkreis keine unkomprimierten DEM-Daten vorliegen, sucht das System die entsprechenden komprimierten Tiles aus den lokalen Daten.

### • Entpacken der benötigten Tiles:

Die gefundenen komprimierten DEM-Tiles werden einmalig in den unkomprimierten Zustand entpackt. Diese unkomprimierten Tiles werden dann auf dem Speicher lokal gespeichert.

### • Direkte Nutzung der unkomprimierten Daten:

Nach dem Entpacken kann die Recheneinheit, vorzugsweise ein Mikrocontroller, ohne weitere Verzögerungen auf die unkomprimierten Daten zugreifen. Dadurch entfällt das wiederholte Entpacken, was Zeit spart und Rechenressourcen schont.

### 4. Speicher- und Schreibzyklenoptimierung

### • Minimierung von Schreibvorgängen:

Durch bedarfsorientiertes Entpacken wird die Anzahl der Schreibvorgänge auf den Speicher reduziert. Dies schont die Lebensdauer des Speichers, da häufiges Schreiben und Löschen zu Verschleiß führen kann.

### • Verwaltung des Speicherplatzes:

Unkomprimierte DEM-Tiles, die weit, d.h. über den vordefinierten Radius hinaus, von der aktuellen Position entfernt sind, werden nur dann gelöscht, wenn der freie Speicherplatz auf dem Speicher knapp wird. Dieser Ansatz verhindert unnötige Schreibvorgänge und bewahrt bereits entpackte Daten, die möglicherweise bald wieder benötigt werden.

### • Datenpriorisierung und -löschung:

Das System priorisiert das Beibehalten von unkomprimierten Tiles im näheren Umkreis oder häufig genutzten Gebieten. Entfernt werden ältere oder weit entfernte Tiles erst nach Bedarf zur Gewinnung von freiem Speicherplatz.

### 5. Vorteile des Prinzips

### • Leistungsoptimierung:

Die Recheneinheit arbeitet primär mit unkomprimierten Daten, was schnelle Zugriffszeiten ermöglicht, ohne jedes Mal zeitintensive Dekompressionsvorgänge durchführen zu müssen.

### • Effiziente Ressourcennutzung:

Speicherplatz wird dank Kompression effizient genutzt, und Schreibzyklen werden auf ein Minimum reduziert, was die Lebensdauer des Speichers verlängert.

### • Räumliche Relevanz:

Bedarfsorientiertes Entpackeng stellt sicher, dass nur Daten für nahegelegene Gebiete unkomprimiert vorliegen, was den Speicherbedarf reduziert und die relevanten Informationen für den Nutzer schnell verfügbar macht.

### Zusammenfassung:

Das beschriebene Prinzip nutzt komprimierte DEM-Daten-Tiles, um Speicherplatz zu sparen, und entpackt diese bedarfsgerecht basierend auf der GPS-Position des Geräts. Indem unkomprimierte DEM-Daten für nahegelegene Gebiete bereitgestellt und weit entfernte, ungenutzte Tiles erst bei Platzmangel gelöscht werden, optimiert das System die Performance, minimiert Schreibvorgänge und gewährleistet eine schnelle, ortsrelevante Datenverfügbarkeit für Anwendungen wie das Gleitschirmfliegen.

Integration von Flugpositionsdaten in die Topographieanzeige für Gleitschirm- und Hängegleiterpiloten
Beim Gleitschirm- oder Hängegleiterflug sind Informationen über die Position anderer Luftfahrzeuge in der Umgebung von großem Nutzen. Insbesondere in dunstigen oder wolkenreichen Abschnitten oder allgemein in Bedingungen, wo die Sicht eingeschränkt ist, kann der Empfang von Positionsdaten über Systeme wie FLARM, ADS-L, FANET oder ähnliche Technologien einen erheblichen Sicherheits- und Planungsmehrwert bieten. Die Einbindung dieser Informationen in die topographische Anzeige auf dem Fluggerät funktioniert wie folgt und bringt diverse Vorteile:

### 1. Datenempfang und -übertragung

### • Empfang externer Positionsdaten:

Technologien wie FLARM, ADS-L oder FANET ermöglichen den Empfang von Positionsdaten anderer in der Nähe fliegender Luftfahrzeuge (Gleitschirme, Hängegleiter, Segelflugzeuge etc.). Diese Systeme senden regelmäßig Positions-, Höhen- und Kursinformationen, die über Funk empfangen werden können.

### • Eigene Positionsübertragung:

Gleichzeitig sendet das eigene Fluginstrument kontinuierlich seine Position und Flugparameter, sodass andere Piloten diese Informationen ebenfalls empfangen können. Dies fördert ein gegenseitiges Bewusstsein in der Luft und hilft bei der Vermeidung von Kollisionen und Engpässen.

### 2. Integration in die Topographieanzeige

### • Kartenbasierte Darstellung:

Die empfangenen Positionsdaten werden mit den vorhandenen topographischen Karten und DEM-basierten Hillshading-Darstellungen kombiniert. Auf dem Bildschirm des Fluginstruments erscheinen Symbole oder Markierungen, die den aktuellen Standort anderer Luftfahrzeuge anzeigen, eingebettet in die Geländedarstellung.

### • Relativer Kontext:

Diese Markierungen werden relativ zur eigenen Position und der umliegenden Topographie angezeigt. Dadurch erkennt der Pilot nicht nur, wo sich andere Luftfahrzeuge befinden, sondern auch, in welchem Geländeabschnitt (z. B. oberhalb oder unterhalb eines Tals, nahe einem Bergrücken) diese fliegen.

### 3. Praktische Vorteile und Nutzen

### • Aufwindsuche durch Beobachtung anderer Flieger:

Piloten suchen oft nach Orten mit guten Aufwinden, insbesondere bei langen Gleitstrecken oder Talquerungen. Wo andere Piloten in der Nähe fliegen, ist mit hoher Wahrscheinlichkeit ebenfalls Aufwind vorhanden. Die Anzeige der Positionen anderer Flieger auf der Topographie hilft, Bereiche mit aktiven Thermiken oder Aufwinden leichter zu identifizieren.

### • Verbesserte Situationswahrnehmung bei eingeschränkter Sicht:

In dunstigen oder wolkenreichen Abschnitten ist die Sicht nach vorne begrenzt. Übermittelte Positionsdaten ermöglichen es dem Piloten, sich auch ohne direkte Sichtkontakt über die Flugbewegungen in der Umgebung zu informieren. So wird unsicheres Fliegen in Gegenwindzonen oder Kollisionen vermieden.

### • Entscheidungshilfe für Flugrouten:

Weiss der Pilot, wo sich andere Luftfahrzeuge befinden, kann er besser einschätzen, wo günstige Aufwinde sind und seine Flugroute entsprechend anpassen. Bei der Planung von Talquerungen oder längeren Gleitschirmstrecken zeigt die Positionierung anderer Luftfahrzeuge auf der Karte mögliche Flugpfade mit kontinuierlichem Aufwind an.

### • Sicherheitsaspekte:

Die Echtzeit-Überwachung der Positionen umliegender Luftfahrzeuge ermöglicht ein erhöhtes Bewusstsein für potenzielle Kollisionen oder Konfliktsituationen. Die Anzeige auf der Karte trägt dazu bei, den Luftraum rund um den eigenen Kurs besser einzuschätzen.

### 4. Technische Umsetzung

### • Datenfusion:

Das Fluginstrument empfängt Positionsdaten über kompatible Funktechnologien und fusioniert diese Daten mit lokalen GPS- und DEM-Informationen. Eine Softwarekomponente synchronisiert die Daten, passt sie an die topographische Projektion an und aktualisiert die Anzeige in Echtzeit.

### • Visualisierung:

Auf dem Display werden andere Luftfahrzeuge als Symbole dargestellt, die sich auf dem Relief der Umgebung befinden. Durch unterschiedliche Farben oder Formen können unterschiedliche Luftfahrzeugtypen oder wichtige Parameter (wie Höhe oder Geschwindigkeit) dargestellt werden.

### Zusammenfassung:

Die Integration von Flugpositionsdaten über Systeme wie ADS-L, FANET oder FLARM in die topographische Anzeige eines mobilen Fluginstruments bietet Piloten von Gleitschirmen und Hängegleitern erhebliche Vorteile. Die Darstellung anderer Luftfahrzeuge auf der Umgebungskarte ermöglicht es, Aufwindquellen leichter zu finden, auch bei schlechter Sichtlage, und unterstützt die sichere und effiziente Routenwahl. Die Information darüber, wo andere fliegen, dient als Indikator für Aufwind und verbessert das Situationsbewusstsein im Luftverkehr, was letztlich zu sichereren und erfolgreicheren Flugerlebnissen beiträgt.

Fernsteuerung zur Anpassung der Anzeige während des Gleitschirmflugs
In turbulenten Situationen kann es kritisch sein, den Gleitschirm jederzeit unter Kontrolle zu behalten. Besonders gefährlich wird es, wenn Piloten in starker Turbulenz die Bremsgriffe loslassen müssen und dadurch die Kontrolle über den Schirm verlieren. Eine innovative Lösung besteht darin, ein Fernsteuerungssystem am Tragegurt anzubringen, das es ermöglicht, das Fluginstrument zu bedienen. Dadurch kann der Pilot wichtige Einstellungen ändern, ohne die Bremsgriffe loszulassen. Ein solches Fernsteuerungssystem umfasst eine oder mehrere Fernsteuerungen . Insbesondere eine einfache Umsetzung mit nur einem Knopf je Fernsteuerung bietet dabei bereits großen Mehrwert.

### 1. Aufbau der Fernsteuerung

### • Physische Gestaltung:

Eine Fernsteuerung besteht beispielsweise aus einem einzigen großen, leicht bedienbaren Knopf. Sie ist so am Tragegurt des Piloten befestigt, dass sie auch mit Handschuhen oder in anspruchsvollen Flugmanövern gut erreichbar ist. Eine solche Fernsteuerung kann kabelgebunden oder kabellos mit dem Fluginstrument verbunden werden.

### • Einfaches Bedienkonzept:

Beispielsweise können durch unterschiedlich langes Drücken des Knopfes einer Fernsteuerung verschiedene Befehle an das Fluginstrument erteilt werden. Unter anderem sind folgende Modi vorstellbar:
∘ Kurzes Drücken des Knopfes: Wechselt die Anzeige auf dem Fluginstrument zum nächsten Bildschirm oder Menüpunkt.
∘ Gedrückt halten des Knopfes: Scrollt durch verschiedene Varianten oder Einstellungen des aktuellen Anzeigebildschirms, bis die gewünschte Konfiguration ausgewählt wurde.
o Bei mehreren Fernsteuerungen können die einzelnen Fernsteuerung jeweils dieselben Befehle oder unterschiedliche Befehle an das Fluginstrument erteilen.
o Die Fernsteuerung kann ferner verwendet werden, um Parameter für die Berechnung eines Hillshading-Bilds zu verändern.

### 2. Funktionsweise und Ablauf

Angenommen, der Pilot befindet sich auf dem Topographie-Bildschirm des Fluginstruments:

### 1. Kurzer Druck zum Umschalten:

Der Pilot drückt den Knopf kurz, wodurch die Anzeige auf dem Bildschirm zum nächsten Modus wechselt. Dies könnte zum Beispiel die Topographie plus Talwinde anzeigen.

### 2. Gedrückt halten zum Durchscrollen:

Hält der Pilot den Knopf gedrückt, beginnt die Anzeige innerhalb des aktuellen Modus zu scrollen. So werden sukzessive weitere Informationsschichten hinzugefügt oder entfernt:
∘ Erster Zustand: Nur Topographie
∘ Nächster Zustand (nach längerem gedrücktem Halten): Topographie + Talwinde
∘ Weiterer Zustand: Topographie + Talwinde + Buddies (Positionen anderer Gleitschirme/Hängegleiter)
∘ Weitere Kombinationen: Zusätzliche Layer könnten z. B. Wetterdaten, Flugrouten oder andere relevante Informationen sein.

### 3. Auswahl der gewünschten Einstellung:

Sobald die gewünschte Kombination aus Informationen angezeigt wird (z. B. Topographie + Talwinde + Buddies), lässt der Pilot den Knopf los. Die Anzeige bleibt in diesem Zustand, bis der Pilot erneut eine Änderung vornehmen möchte.

### 3. Vorteile und Nutzen in kritischen Situationen

### • Bedienung vom Tragegurt:

In turbulenten Situationen muss der Pilot seine Hände auf den Bremsgriffen halten, um den Schirm zu kontrollieren. Ein Fernsteuerungssystem am Tragegurt ermöglicht es, Einstellungen des Fluginstruments zu ändern, ohne die Hände von den Bremsgriffen nehmen zu müssen.

### • Schnelle und intuitive Bedienung:

Das simple Ein-Knopf-System ist leicht erlernbar und erlaubt dem Piloten, schnell durch unterschiedliche Anzeigemodi zu wechseln oder diese zu modifizieren, ohne komplexe Eingaben durchführen zu müssen.

### • Erhöhte Sicherheit:

Durch den einfachen Zugriff auf wichtige Informationen (wie Topographie, Talwinde und Positionen anderer Flieger) kann der Pilot auch in schwierigen Situationen fundierte Entscheidungen treffen - etwa die Wahl der Flugroute oder die Einschätzung von Aufwindgebieten - was die Sicherheit erheblich erhöht.

### 4. Erweiterungsmöglichkeiten

### • Anpassbare Anzeigeprofile:

Piloten könnten zuvor ihre bevorzugten Informationskombinationen speichern, sodass sie mit dem Fernsteuerungssystem schnell zwischen diesen Profilen wechseln können.

### • Feedbackmechanismen:

Durch haptisches Feedback (z. B. Vibrationen) am Knopf oder akustische Signale könnte der Pilot bestätigt bekommen, dass eine Änderung erfolgreich durchgeführt wurde, ohne auf den Bildschirm schauen zu müssen. Zu diesem Zweck kann das Fernsteuerungssystem entsprechende Vibrationsmodule und/oder Lautsprecher und/oder Ausgänge für Kopfhörer umfassen.

Das beschriebene Fernsteuerungssystem ermöglicht es Gleitschirm- und Hängegleiterpiloten, das Fluginstrument per einfachem Knopfdruck zu bedienen. Beispielsweise durch kurzes Drücken des Knopfs einer Fernsteuerung zum Umschalten von Anzeigemodi und langem Gedrückthalten desselben zum Durchscrollen von Informationskombinationen können Piloten in turbulenten Situationen schnell und sicher zwischen verschiedenen Darstellungen wie Topographie, Talwinden und Positionen anderer Flieger wechseln. Dies erhöht die Sicherheitslage und unterstützt den Piloten bei der Entscheidung unter erschwerten Sicht- und Flugbedingungen.

Die Darstellung von Hillshading zielt darauf ab, Geländemerkmale wie Erhebungen, Senken und Neigungen durch Licht- und Schatteneffekte so realitätsnah wie möglich wiederzugeben. Dabei gibt es verschiedene Ansätze zur Visualisierung:

### Graustufige Darstellung

### • Kontrast und Klarheit:

Eine graustufige Darstellung nutzt unterschiedliche Helligkeitsstufen, um Licht und Schatten zu simulieren. Dadurch entstehen hohe Kontraste, die Reliefstrukturen klar erkennbar machen. Erhebungen erscheinen hell, während Senken dunkler wirken - so wird die Topographie intuitiv erfassbar.

### • Lesbarkeit:

Graustufen sind neutral und lenken nicht von den Reliefdetails ab. Da Farben hier nicht als zusätzliche visuelle Information dienen, liegt der Fokus ganz auf der Formgebung des Geländes. Dies führt oft zu einer sehr guten Lesbarkeit und Verständlichkeit, insbesondere wenn komplexe Höhenunterschiede dargestellt werden sollen.

### • Universelle Interpretation:

Graustufen-Hillshading ist weit verbreitet und wird in vielen Kartenanwendungen und GIS-Systemen verwendet. Daher ist es für Nutzer in der Regel leicht verständlich und intuitiv interpretierbar.

### Alternative Darstellungsformen

### • Farbige Hillshading-Kombinationen:

Es ist auch möglich, Farbe zur Unterstützung heranzuziehen - beispielsweise durch Kombination von Farbkarten mit Graustufen-Hillshading oder durch Anwendung von Farbabstufungen, die bestimmte Höhenlagen markieren. Farben können zusätzliche Informationen (etwa Vegetation, Landnutzung oder Höhendaten) kommunizieren, können jedoch die reinen Reliefinformationen überdecken, wenn sie nicht sorgfältig eingesetzt werden.

### • Relief-Linien (Konturen):

Neben oder in Kombination mit Hillshading können auch Konturlinien oder Farbschattierungen auf Basis von Höhendaten verwendet werden, um Geländestrukturen darzustellen.

### Beste Praxis

### • Lesbarkeit und Kontext:

Eine reine Graustufen-Hillshading-Darstellung gilt allgemein als sehr gut lesbar, da sie den Betrachter durch starke Licht-Schatten-Kontraste direkt die Höhenunterschiede erkennen lässt. In vielen Fällen bietet sie die beste Balance zwischen Detailgenauigkeit und Einfachheit.

### • Anwendungsabhängigkeit:

Je nach Einsatzzweck (z. B. Kombination mit weiteren thematischen Kartenüberlagerungen wie Vegetation, Gewässern oder Nutzungsarten) kann eine farbige Darstellung sinnvoll sein. Dabei sollte jedoch darauf geachtet werden, dass die Grundinformationen des Reliefs nicht verloren gehen.

### Fazit:

Eine graustufige Darstellung von Hillshading gilt als eine der am besten lesbaren Methoden, da sie hohe Kontraste erzeugt und die Geländestrukturen klar und intuitiv hervorhebt. Dabei bleibt der Fokus auf der reinen Topographie, ohne durch Farbeffekte abgelenkt zu werden. Farbige Varianten können ergänzend eingesetzt werden, sollten aber sorgfältig kombiniert werden, um die Lesbarkeit nicht zu beeinträchtigen.

Auf einem ausschließlich schwarz-weißen (SW) Display stehen keine Graustufen zur Verfügung. Dennoch gibt es verschiedene Techniken, um Hillshading und Geländedetails auf solchen Displays effektiv darzustellen:

### 1. Verwendung von Dithering-Techniken

Dithering ist eine Methode, bei der durch das Musterieren von schwarzen und weißen Pixeln verschiedene Graustufen simuliert werden. Dabei werden Pixel in bestimmten Anordnungen kombiniert, um den Eindruck unterschiedlicher Helligkeitsstufen zu erzeugen. Für Hillshading kann dies folgendermaßen umgesetzt werden:

### • Ordered Dithering:

Eine feste Dithermatrix (z. B. Bayer-Matrix) wird verwendet, um die Helligkeitswerte von Hillshading-Berechnungen in Schwarz-Weiß-Pixelmuster zu übersetzen. Bereiche mit leichteren Tönen weisen dabei ein Muster mit mehr weißen Pixeln auf, während dunklere Bereiche dichter mit schwarzen Pixeln dargestellt werden.

### • Error Diffusion (z. B. Floyd-Steinberg-Dithering):

Bei dieser Methode wird der Rundungsfehler der Umwandlung von Graustufen in Schwarz-Weiß-Pixel auf umliegende Pixel verteilt. Dadurch entstehen fließendere Übergänge und realistischere Schattierungen.

Durch Dithering lassen sich also mehrere Stufen zwischen reinem Schwarz und Weiß simulieren, was eine differenzierte Darstellung von Relief und Schattierungen auch ohne echte Graustufen ermöglicht.

### 2. Nutzung von Konturlinien und Texturierung

Neben Dithering können zusätzliche Techniken eingesetzt werden, um Geländedetails auf einem SW-Display hervorzuheben:

### • Konturlinien (Isolinien):

Anstelle von reinem Hillshading können Geländelinien verwendet werden, um Höhenänderungen darzustellen. Diese Linien verdeutlichen die Formgebung des Geländes und kompensieren das Fehlen von Schattierungsstufen.

### • Strukturierte Muster:

Unterschiedliche Textur- oder Schraffurmuster (zum Beispiel diagonale Linien, Raster oder andere geometrische Muster) können zur Kennzeichnung verschiedener Neigungs- oder Höhenbereiche dienen. Bestimmte Muster können steile Hänge oder flache Bereiche symbolisieren.

### 3. Kombination von Techniken

Für eine optimale Darstellung könnte eine Kombination aus Dithering und Konturlinien gewählt werden:

### • Dithering für feine Schattierungen:

Simuliert leichte, mittlere und dunkle Bereiche zur Hervorhebung von Reliefkonturen und Schattenspielen.

### • Konturlinien zur Ergänzung:

Zeichnen die Höhenänderungen zusätzlich ein, um die Topographie klarer zu definieren, insbesondere wenn das Dithering allein nicht genügend Detail liefert.

### 4. Praktische Umsetzung und Optimierung

Bei der Implementierung auf SW-Displays sollte darauf geachtet werden:

### • Rechenaufwand:

Dithering-Algorithmen können rechenintensiv sein. Daher sind effiziente Implementierungen oder vorgerenderte Muster wichtig, um die Leistung auf leistungsschwachen Geräten nicht zu beeinträchtigen.

### • Anzeigequalität:

Die Wahl des Dithering-Musters und die Kombination mit Konturlinien sollten so abgestimmt sein, dass der Nutzer die Topografie möglichst intuitiv lesen kann, trotz der begrenzten Farbdarstellung.

### Zusammenfassung:

Auch ohne Graustufen können Geländeschattierungen durch geschickte Anwendung von Dithering-Techniken und ergänzenden Konturlinien auf einem schwarz-weißen Display simuliert werden. Diese Methoden ermöglichen es, Unterschiede in der Helligkeit und somit die Geländestruktur darzustellen, obwohl nur zwei Farben verfügbar sind.

Eine höhere Pixeldichte bzw. eine höhere Auflösung des LCD-Displays wirkt sich positiv auf die Qualität des Dithering aus:

### 1. Feinere Abstufungen durch mehr Pixel

### • Erhöhte Detailgenauigkeit:

Mit einer größeren Anzahl kleinerer Pixel kann das Dithering komplexere Muster erzeugen, die feinere Abstufungen zwischen Schwarz und Weiß simulieren. Das bedeutet, dass Schattierungen und Übergänge glatter und detaillierter wirken, je mehr Pixel zur Verfügung stehen.

### • Bessere Annäherung an Graustufen:

Höhere Auflösung bietet mehr Möglichkeiten, unterschiedliche Dithering-Muster zu platzieren. Dadurch kann die Illusion von Zwischentönen effektiver erzeugt werden, weil die Variation der Pixelkonfiguration detaillierter und subtiler wird.

### 2. Verbesserte Darstellung der Topographie

### • Realistischere Relief-Darstellung:

Bei der Simulation von Hillshading auf einem SW-Display ermöglichen mehr Pixel komplexere Schattierungsmuster, die die Geländestruktur genauer abbilden. Dies erhöht die Lesbarkeit und Detailtreue der topographischen Informationen.

### • Feinere Texturen und Konturen:

Höhere Auflösung erlaubt die Darstellung feinerer Konturlinien und Muster, was die Definition von Geländemerkmalen und -neigungen verbessert. Insbesondere bei komplexen Geländestrukturen ist dies von Vorteil.

### 3. Technischer Aspekt des Dithering

### • Optimale Nutzung von Dithering-Matrizen:

Dithering-Algorithmen wie Ordered Dithering oder Floyd-Steinberg profitieren von höheren Auflösungen, da die verwendeten Matrixmuster über mehr Pixel verteilt werden können, was deren Effektivität steigert.

### • Reduzierung von sichtbaren Artefakten:

Bei niedriger Auflösung können Dithering-Muster als grobkörnige oder blockartige Artefakte wahrgenommen werden. Eine höhere Pixeldichte reduziert diese sichtbaren Muster, da die Übergänge glatter erscheinen.

### Fazit

Eine hohe Pixeldichte auf einem SW-LCD-Display verbessert die Effizienz und Qualität des Dithering erheblich. Mehr und kleinere Pixel ermöglichen feinere Schattierungsstufen und detailliertere Darstellungen, wodurch die Simulation von Hillshading und die Erkennbarkeit von Geländemerkmalen auf schwarz-weißen Displays optimiert werden.

Die Qualität des Dithering auf einem schwarz-weißen Display hängt von mehreren Faktoren ab, darunter die Auflösung, die Art des angewandten Dithering-Verfahrens, der Betrachtungsabstand und die spezifischen Anforderungen der Anwendung. Es gibt keinen universellen, festen DPI-Wert (Dots Per Inch), ab dem Dithering automatisch qualitativ "gut" wird, da die Wahrnehmung subjektiv und anwendungsabhängig ist. Dennoch lassen sich einige allgemeine Richtwerte und Überlegungen anführen:

### Allgemeine Überlegungen zur DPI und Dithering-Qualität

### • Niedrigere DPI-Bereiche (unter 100 DPI):

In diesem Bereich sind die Pixel relativ groß, und Dithering-Muster können deutlich sichtbar und blockartig wirken. Die feinen Abstufungen zwischen Schwarz und Weiß lassen sich weniger gut simulieren, was zu sichtbaren Artefakten und einer weniger glatten Darstellung führt.

### • Mittelbereich (etwa 100-200 DPI):

Bei einer Auflösung in diesem Bereich wird das Dithering schon deutlich effektiver. Die Pixel sind kleiner, sodass Dithering-Muster feinere Schattierungen simulieren können. Viele Anwendungen auf älteren oder einfachen Geräten erzielen akzeptable Ergebnisse in diesem DPI-Bereich, wenn die Betrachtungsabstände entsprechend sind.

### • Hohe DPI-Bereiche (über 200 DPI):

Je höher die Pixeldichte, desto glatter und detailreicher lassen sich Schattierungen durch Dithering simulieren. Ab etwa 200 DPI und höher beginnen die Dithering-Artefakte weniger auffällig zu sein, da die Muster feiner sind. Für anspruchsvollere Darstellungen, bei denen eine realitätsnahe Simulation von Graustufen gewünscht ist, bieten DPI-Werte über 300 DPI oft sehr gute Ergebnisse, da die Übergänge nahezu fließend erscheinen.

### Einflussfaktoren auf die wahrgenommene Qualität

### • Betrachtungsabstand:

Die benötigte DPI für eine "gute" Wahrnehmung des Dithering-Ergebnisses hängt auch vom typischen Betrachtungsabstand ab. Bei größeren Abständen erscheinen Pixel weniger deutlich, sodass auch niedrigere DPI-Werte akzeptable Ergebnisse liefern können.

### • Dithering-Verfahren:

Fortschrittliche Dithering-Algorithmen wie Floyd-Steinberg oder andere Fehlerdiffusionsmethoden können bei gegebener Auflösung bessere Ergebnisse liefern als einfachere Verfahren (z. B. Ordered Dithering).

### • Anzeigegröße und -typ:

Die Größe des Displays und die physikalische Anordnung der Pixel beeinflussen ebenfalls, wie gut das Dithering wahrgenommen wird. Kleinere Displays mit hoher Pixeldichte bieten in der Regel eine bessere Dithering-Qualität als große Displays mit gleicher DPI.

### Praktische Einschätzung

### • Für viele Anwendungen:

Schon bei etwa 150-200 DPI können auf kleinen bis mittelgroßen Displays qualitativ akzeptable Dithering-Ergebnisse erzielt werden, insbesondere wenn der Betrachtungsabstand moderat ist und fortgeschrittene Dithering-Methoden eingesetzt werden.

### • Für hochdetaillierte Anwendungen:

Höhere DPI-Werte ab 300 DPI verbessern die Glätte der Schattierungen und reduzieren sichtbare Muster deutlich. Dies ist besonders vorteilhaft, wenn feine Details und realistische Reliefdarstellungen benötigt werden.

### Fazit

Es gibt keinen strikten Schwellenwert in DPI, der allgemein als Grenze für "gutes" Dithering gilt. Je nach Anwendungsfall, Betrachtungsbedingungen und eingesetzter Technik kann bereits eine Auflösung von etwa 150-200 DPI ausreichend sein. Für besonders glatte und detailreiche Darstellungen wird jedoch eine höhere Pixeldichte (über 200-300 DPI) empfohlen. Die optimale DPI hängt letztlich von den spezifischen Anforderungen der Anwendung und den oben genannten Faktoren ab.

Prozessbeschreibung für ein Moving-Map-Hillshading-System mit minimaler Latenz
Die Echtzeit-Darstellung eines Hillshading-basierten Moving Maps auf einem mobilen Fluginstrument stellt hohe Anforderungen an die Rechenleistung. Um ruckelfreie Aktualisierungen zu ermöglichen und gleichzeitig die aufwendige Berechnung von Hillshading zu bewältigen, kann einerseits ein mehrstufiger Pufferungs- und Rendering-Prozess oder eine zumindest teilweise parallele Berechnung aufgeteilt auf mehrere Prozessoren eingesetzt werden.

### Moving-Map-Hillshading mit einem Prozessor:

### 1. Systemkomponenten und Pufferung

### • Tile Buffer 1 und Tile Buffer 2:

Erster und zweiter Tile-Buffer 41, 42 zur Aufnahme vorgerenderter Hillshading-Kacheln. Jeder Tile-Buffer speichert ein komplettes Hillshading-Bild (z. B. 1280 × 1280 Pixel) für einen bestimmten Geländeausschnitt.

### • Frame Buffer 43:

Ein Puffer, der den aktuell anzuzeigenden Bildausschnitt enthält. Er kann auch Transformationen wie Drehungen aufnehmen.

### • DMA Buffer 21:

Ein temporärer Puffer zur Übertragung der finalen Bilddaten vom Framebuffer 43 zum Display 20 über Direct Memory Access (DMA).

### • Recheneinheit 10:

Die Recheneinheit 10 ist vorzugsweise als Microcontroller ausgebildet und kann ferner einen oder mehrere RAM-Speicher 15 umfassen.

### • Weitere Komponenten:

Das System kann weitere Komponenten wie eine Ortungseinheit 51, ein Funkmodul 52, etc. umfassen.

### 2. Ablauf des Rendering- und Aktualisierungsprozesses

### a) Initiales Rendern und Anzeigevorbereitung

### 1. Vorhandenes Hillshading laden:

Im ersten Tile Buffer 41 befindet sich bereits ein fertig gerendertes Hillshading-Bild mit hoher Auflösung. Dies kann ein Hillshading-Bild mit einer standardisierten Lichtquelle oder ein Hillshading-Bild aus einem vorhergehenden Berechnungsschritt sein. Es ist zudem denkbar, dass bis zum Abschluss einer ersten Parallelberechnung im zweiten Tile Buffer 42 (Schritt b) kein Hillshading-Bild im ersten Tile-Buffer 41 vorliegt und die hier beschriebenen Schritte in einem ersten Durchgang mit einem generischen Bild durchgeführt oder aber erstmalig nicht durchgeführt werden.

### 2. Kopieren in den Framebuffer 43:

Aus dem Hillshading-Bild im ersten Tile Buffer 41 wird ein Bildausschnitt 2 entsprechend der aktuellen Position und Blickrichtung in den Framebuffer 43 kopiert. Dabei kann der Framebuffer 43 optional gedreht werden, um die Kartenansicht an die aktuelle Flugausrichtung anzupassen. So kann insbesondere eine physische Drehung des Displays 20 unabhängig von der Kartenansicht erfolgen, das heisst, die Kartenansicht bleibt ortsfest orientiert, vorzugsweise ortsfest in Flugausrichtung orientiert, und der Bildausschnitt 2 ist entsprechend der aktuellen Position und Blickrichtung darstellbar. Auf diese Weise ist insbesondere eine erleichterte Erkennung von Objekten, beispielsweise Berggipfeln, oder anderen Fluggeräten, möglich, da deren Position auf dem Bildausschnitt 2 stets ihrer tatsächlichen Position relativ zum Fluggerät in Blickrichtung entspricht.

### 3. Dithering:

Sobald der Bildausschnitt im Framebuffer 43 vorliegt, wird ein Dithering auf diesen Bereich angewendet, falls das Display 20 keine Graustufen unterstützt. Dies verbessert die Visualisierung auf schwarz-weißen Displays.

### 4. Zusätzliche Anzeigen einblenden:

Im Framebuffer 43 werden darüber hinaus zusätzliche Informationen wie Talwinde, Positionen anderer Luftfahrzeuge ("Buddies") oder andere Overlays integriert.

### 5. Übertragung zum Display 20:

Der vollständig vorbereitete Framebuffer-Inhalt wird in den DMA-Buffer 21 kopiert. Über den DMA-Prozess wird dieser Buffer dann auf das Display 20 übertragen, wodurch ein flüssiger Bildwechsel gewährleistet ist.

### b) Paralleles Vorbereiten des nächsten Hillshading-Bildes

### 1. Parallelberechnung im zweiten Tile Buffer 42:

Während der erste Tile Buffer 41 zur Anzeige verwendet wird, berechnet der Prozessor 11 im zweiten Tile Buffer 42 ein neues Hillshading-Bild basierend auf aktuellen DEM-Daten oder vorberechneten Daten, Position, Sonnenstand und Benutzerparametern.

### 2. Austausch der Tile Buffer:

Sobald das neue Hillshading-Bild im zweiten Tile Buffer 42 fertiggestellt ist, erfolgt ein Buffertausch:
∘ Der Inhalt des zweiten Tile Buffer 42 wird in den ersten Tile Buffer 41 übertragen, sodass künftig dieser aktualisierte Datensatz für die Anzeige verwendet werden kann.
∘ Der zweite Tile Buffer 42 wird danach geleert und für die nächste Berechnung wiederverwendet.

Alternativ zu der Parallelberechnung im zweiten Tile Buffer 42 und dem Austausch der Tile Buffer beziehungsweise deren Inhalts, kann eine parallele Vorbereitung des nächsten Hillshading-Bildes auch erfolgen, indem
∘ Der erste Tile Buffer 41 zur Anzeige verwendet wird und parallel der Prozessor 11 im zweiten Tile Buffer 42 ein neues Hillshading-Bild basierend auf aktuellen DEM-Daten oder vorberechneten Daten, Position, Sonnenstand und Benutzerparametern berechnet,
∘ Sobald das neue Hillshading-Bild im zweiten Tile Buffer 42 fertiggestellt ist, der zweite Tile Buffer 42 zur Anzeige verwendet wird, und
∘ der erste Tile Buffer 11 geleert wird und der Prozessor 11 im ersten Tile Buffer 41 ein nächstes, neues Hillshading-Bild berechnet.

Durch die abwechselnde Nutzung des ersten und zweiten Tile Buffers 41, 42 für die Anzeige wird die Anzahl an Kopiervorgänge von Daten, insbesondere von Hillshading-Bildern, reduziert und es kann ein schnellerer Wechsel zwischen einem ersten Hillshading-Bild und einem nächsten Hillshading-Bild erreicht werden.

Vorzugsweise wird dem zur Anzeige verwendeten Tile-Buffer ein sogenannter Pointer zugewiesen und durch Wechsel des Pointers vom ersten zum zweiten Tile-Buffer oder umgekehrt kann zwischen dem ersten oder zweiten Tile-Buffer zur Anzeige eines Hillshading-Bilds gewechselt werden.

### 3. Neuer Berechnungszyklus:

Basierend auf den fortlaufend aktualisierten Standort- und Wetterdaten wird im geleerten ersten Tile Buffer 41 oder geleerten zweiten Tile Buffer 42 der nächste Abschnitt des Hillshading berechnet, parallel zur weiteren Anzeige der Kartenbewegung basierend auf dem Hillshading-Bild aus dem ersten Tile Buffer 41 oder zweiten Tile Buffer 42.

Wahlweise kann das Leeren des ersten oder zweiten Tile Buffers 41, 42 vor der Berechnung eines neuen Hillshading-Bilds auch ausgelassen werden. In diesem Fall wird ein im ersten oder zweiten Tile Buffer 41, 42 vorliegendes Hillshading-Bild mit einem neuen Hillshading-Bild überschrieben.

### c) Kontinuierlicher Ablauf für flüssiges Moving Map Rendering

### • Frame-Updates:

Der Prozess des Kopierens von Ausschnitten aus dem ersten Tile Buffer 41 oder dem zweiten Tile Buffer 42 in den Framebuffer 43, Dithering, Hinzufügen von Overlays und DMA-Übertragung zum Display 20 wiederholt sich kontinuierlich. Dies ermöglicht eine nahezu sofortige Reaktion auf Positionsänderungen und Kamerabewegungen mit geringer Latenz.

### • Hintergrundberechnung:

Während zur Anzeige der Hillshading-Bildern auf dem Display der Inhalt von einem des ersten Tile Buffer 41 oder zweiten Tile Buffer 42 genutzt wird, berechnet die Recheneinheit 10 im Hintergrund das aktualisierte Hillshading-Bild und speichert dieses im jeweils anderen des ersten Tile Buffer 41 oder zweiten Tile-Buffer 42. Durch den parallelen Ablauf und den Bufferwechsel oder die abwechselnde Nutzung der Tile Buffer wird sichergestellt, dass stets aktuelle Kartenbilder zur Verfügung stehen, ohne dass das Moving Map ruckelt.

Vorzugsweise sind dem ersten und zweiten Tile Buffer weitere Tile Buffer vorsehbar. insbesondere sind ein oder mehrere weitere Tile Buffer zur Berechnung und Speicherung einer oder mehrerer Vergrösserungs- oder Reduktionsansichten (Zoomstufen) eines Hillshading-Bildes vorsehbar.

In einer Ausführungsform der Erfindung sind neben dem ersten Tile Buffer 41 und dem zweiten Tile Buffer 42 ein dritter Tile Buffer (nicht dargestellt) und ein vierter Tile Buffer (nicht dargestellt) vorgesehen. Die Recheneinheit 10 ist in der Lage im Hintergrund ein aktualisiertes Hillshading-Bild zu berechnen und dieses in einem der Tile Buffer zu speichern, beispielsweise im ersten Tile Buffer 41. Gleichzeitig kann der Inhalt eines der übrigen Tile Buffer, beispielsweise des zweiten Tile Buffers 42, des dritten oder des vierten Tile Buffers, für die Anzeige eines Hillshading-Bilds auf dem Display genutzt werden. Zwischen den nicht für die Berechnung und Speicherung eines aktualisierten Hillshading-Bildes beanspruchten Tile Buffern kann beliebig und ohne Neuberechnung deren Inhalts für die Anzeige auf dem Display gewechselt werden, vorzugsweise indem ein Pointer verwendet wird, der jeweils dem für die Anzeige auf dem Display zu verwendenden Tile-Buffer zugewiesen wird. So ist es insbesondere möglich, dass bei Verwendung von vier Tile Buffern die Berechnung und Speicherung eines aktualisierten Hillshading-Bildes unter Beanspruchung eines der vier Tile Buffer erfolgt und im Wesentlichen gleichzeitig drei Vergrösserungs- oder Reduktionsansichten (Zoomstufen) eines Hillshading-Bildes in den anderen drei der vier Tile Buffer gespeichert sind, wobei willkürlich zwischen der Anzeige einer dieser Zoomstufen gewechselt werden kann.3. Vorteile dieses Ansatzes

### • Geringe Latenz:

Durch die Nutzung vorgerenderter Tiles und paralleler Hintergrundberechnungen kann die Moving Map nahezu in Echtzeit aktualisiert werden.

### • Ruckelfreie Darstellung:

Das DMA-basierte Kopieren vom Framebuffer 43 zum Display sorgt für flüssige Bildübergänge und minimiert Verzögerungen.

### • Effiziente Ressourcennutzung:

Durch den Einsatz von zwei Tile Buffern zur parallelen Nutzung und Berechnung wird die aufwendige Hillshading-Berechnung vom Echtzeitprozess entkoppelt, was die Gesamtleistung optimiert.

### Moving-Map-Hillshading mit mehreren Prozessoren:

### 1. Systemkomponenten und Pufferung

### • Recheneinheit 10:

Die Recheneinheit 10, vorzugsweise ausgebildet als Microcontroller, umfasst zumindest zwei Prozessoren vorzugweise zumindest eine CPU 11 und zumindest eine GPU 12. Die Recheneinheit kann ferner einen oder mehrere RAM-Speicher 15 umfassen.

### • Frame Buffer 43:

Ein Puffer, der den aktuell anzuzeigenden Bildausschnitt enthält. Er kann auch Transformationen wie Drehungen aufnehmen.

### • DMA Buffer 21:

Ein temporärer Puffer zur Übertragung der finalen Bilddaten vom Framebuffer 43 zum Display 20 über Direct Memory Access (DMA).

### • Weitere Komponenten:

Das System kann weitere Komponenten wie eine Ortungseinheit 51, ein Funkmodul 52, etc. umfassen.

### 2. Ablauf des Rendering- und Aktualisierungsprozesses

### a) Initiales Rendern und Anzeigevorbereitung

### 1. Hillshading-Bild berechnen:

Auf Basis von DEM Daten oder vorberechneten Daten berechnet einer der zumindest zwei Prozessoren, vorzugsweise die GPU 12, ein Hillshading-Bild und speichert dieses im Framebuffer 43.

### 2. Dithering:

Sobald das Hillshading-Bild im Framebuffer 43 vorliegt, wird ein Dithering auf diesen Bereich angewendet, falls das Display 20 keine Graustufen unterstützt. Dies verbessert die Visualisierung auf schwarzweißen Displays. Vorzugsweise wird das Dithering durch die GPU 12 durchgeführt. Es ist aber auch möglich das Dithering durch die CPU 11 durchzuführen. Hier könnte beispielsweise eine angepasste Variante vom Wavefront Dithering oder ein Error Diffusion Dithering verwendet werden.

### 3. Zusätzliche Anzeigen einblenden:

In das im Framebuffer 43 vorliegende Hillshading-Bild werden darüber hinaus zusätzliche Informationen wie Talwinde, Positionen anderer Luftfahrzeuge ("Buddies") oder andere Overlays integriert.

### 4. Übertragung zum Display:

Der vollständig vorbereitete Framebuffer-Inhalt wird in den DMA-Buffer 21 kopiert. Über den DMA-Prozess wird dieser Buffer dann auf das Display 20 übertragen, wodurch ein flüssiger Bildwechsel gewährleistet ist.

### b) Kontinuierlicher Ablauf für flüssiges Moving Map Rendering

### • Frame-Updates:

Der Prozess des Berechnens eines Hillshading-Bilds und Ablegens im Framebuffer 43, Dithering, Hinzufügen von Overlays und DMA-Übertragung zum Display 20 wiederholt sich kontinuierlich. Dies ermöglicht eine nahezu sofortige Reaktion auf Positionsänderungen oder Änderungen der Blickrichtung mit geringer Latenz.

### • Hintergrundberechnung:

Durch die zumindest teilweise parallel ablaufende Berechnung aufgeteilt auf zumindest zwei Prozessoren wird sichergestellt, dass stets aktuelle Kartenbilder zur Verfügung stehen, ohne dass das Moving Map ruckelt.

### 3. Vorteile dieses Ansatzes

- Die Erfindung betrifft die Verarbeitung von digitalen Geländemodellen (DEM) zur Berechnung von Hillshading-Effekten auf mobilen Geräten, insbesondere in Systemen, bei denen DEM-Daten von einem Speichermedium, beispielsweise einer SD-Karte, geladen werden. In einer Ausführung der Erfindung können zudem dem die benötigten DEM-Daten in einem virtuellen DEM-Tile zwischengespeichert werden um die Performance zu optimieren. Ergänzend wird der Einsatz eines Mikrocontrollers mit integrierter CPU und GPU vorgesehen, sodass möglichst rechenintensive Aufgaben auf der GPU abgewickelt werden können, um Latenzzeiten weiter zu reduzieren und ein ruckelfreies Bild auf dem Bildschirm zu ermöglichen.

### • Stand der Technik und Problemstellung:

Mobile Geräte, die Hillshading-Berechnungen durchführen, greifen häufig auf digitalisierte Geländemodelle (DEM) zurück, welche in Form von Tiles auf einer SD-Karte gespeichert sind. Bei der herkömmlichen Methode werden zur Berechnung des Hillshadings die erforderlichen DEM-Daten direkt von der SD-Karte geladen. Dies birgt folgende Nachteile:

### • Ladezeiten und Latenz:

Der direkte Zugriff auf die SD-Karte für jeden Berechnungsvorgang führt zu erheblichen Verzögerungen. Da SD-Karten im Vergleich zu internem RAM oder externem High-Speed-Speicher langsamer sind, entstehen signifikante Latenzen, die insbesondere in Anwendungen mit Echtzeitanforderungen problematisch sind.

### • Mehrfachzugriffe auf unterschiedliche DEM-Tiles:

Wenn der zu verarbeitende Gebietsausschnitt (das Hillshading-Gebiet) sich über mehrere DEM-Tiles erstreckt, müssen mehrere einzelne Dateien von der SD-Karte geladen werden. Dieser Mehraufwand führt zu weiteren Performance-Einbußen, da für jeden Tile ein separater Ladeprozess initiiert werden muss.

### • Redundante Datenzugriffe:

Bei wiederholten Berechnungen, z. B. wenn sich die Betrachtungsposition ändert, werden häufig bereits geladene Daten erneut von der SD-Karte gelesen, obwohl sie sich nicht geändert haben. Dies führt zu unnötigem Overhead und ineffizientem Ressourceneinsatz.
- Diese Probleme wirken sich negativ auf die Echtzeitfähigkeit und die Benutzererfahrung aus, da das System durch wiederholte, langsame Datenzugriffe verlangsamt wird.

### • Erfindung und deren Vorteile:

Nach dieser Ausführung der Erfindung können die Nachteile des direkten Ladens der DEM-Daten von der SD-Karte überwunden werden. Hierzu werden zwei wesentliche Konzepte kombiniert:

### • Zwischenspeicherung im virtuellen DEM-Tile:

### • Reduzierung der Ladezeiten:

Anstatt bei jeder Berechnung die Daten direkt von der SD-Karte zu laden, können die für das aktuelle Hillshading-Gebiet benötigten DEM-Daten in einem virtuellen Tile im RAM des Mikrocontrollers oder in externem RAM zwischengespeichert werden. Dadurch entfallen wiederholte, langsame SD-Kartenzugriffe.

### • Verbesserte Echtzeit-Performance:

Da der Zugriff auf RAM wesentlich schneller erfolgt als auf eine SD-Karte, wird die Berechnungszeit für das Hillshading deutlich reduziert, was insbesondere für mobile Anwendungen mit Echtzeitanforderungen von großem Vorteil ist.

### • Dynamisches Nachladen und Löschen von Daten:

Sobald sich die Position des zu berechnenden Gebietes ändert, können DEM-Daten für den virtuellen Tile selektiv nachgeladen werden. Gleichzeitig können nicht mehr benötigte Daten aus dem virtuellen Tile gelöscht werden, um den Speicher optimal zu nutzen.

### • Zusammenführung mehrerer DEM-Tiles:

Der virtuelle DEM-Tile ermöglicht die Zusammenführung von Daten, die ursprünglich in mehreren separaten DEM-Tiles gespeichert waren, in einer einzigen, kontinuierlichen Datenstruktur. Dadurch wird der Verwaltungsaufwand reduziert und die Berechnungen vereinfacht.

### • GPU-beschleunigte Verarbeitung:

### • Parallele Datenverarbeitung:

Der Mikrocontroller verfügt über eine integrierte GPU, die für massiv parallele Rechenoperationen optimiert ist. Durch die Verlagerung der rechenintensiven Hillshading-Berechnungen auf die GPU können zahlreiche mathematische Operationen simultan durchgeführt werden, was zu einer erheblichen Verkürzung der Verarbeitungszeit führt.

### • Entlastung der CPU:

Durch die Auslagerung der intensiven Rechenoperationen an die GPU wird die CPU entlastet und kann sich auf die Steuerungs- und Verwaltungsaufgaben konzentrieren. Dies führt zu einer insgesamt effizienteren Systemarchitektur.

### • Optimierte Bilddarstellung:

Die GPU ermöglicht es, Berechnungen schneller und in höherer Parallelität auszuführen, was zu einer signifikanten Verringerung der Latenzzeiten beiträgt. In Kombination mit dem virtuellen DEM-Tile wird so ein ruckelfreies Bild auf dem Bildschirm gewährleistet - ein entscheidender Vorteil in Echtzeitanwendungen.

### • Zusammenfassung der Vorteile:

Die Erfindung bietet eine signifikante Verbesserung gegenüber der herkömmlichen Methode des direkten SD-Karten-Ladens, indem sie:
- Ladezeiten minimiert und die Echtzeitfähigkeit verbessert, da der häufig benötigte Datenblock im schnellen RAM gespeichert wird.
- Die Performance optimiert, indem der Overhead mehrfacher und redundanter SD-Karten-Zugriffe vermieden wird.
- Die Verwaltung der DEM-Daten effizienter gestaltet, indem Daten aus mehreren Quellen in einem virtuellen, zusammengeführten Tile konsolidiert werden.
- Die Systemressourcen besser ausnutzt, da nicht mehr benötigte Daten dynamisch entfernt werden und nur die tatsächlich relevanten Daten im Speicher gehalten werden.
- Die rechenintensive Hillshading-Berechnung auf die GPU verlagert, was durch parallelisierte Datenverarbeitung zu einer drastischen Verringerung der Latenzzeiten führt und somit eine ruckelfreie Bilddarstellung ermöglicht.
- Diese Vorteile machen das vorgeschlagene System besonders geeignet für mobile Geräte und andere Anwendungen, bei denen eine schnelle und effiziente Verarbeitung von Geländedaten für die Berechnung von Hillshading-Effekten essenziell ist.

### • Abschließende Bemerkung:

Die Erfindung stellt einen innovativen Ansatz zur Optimierung der Hillshading-Berechnung dar. Durch den kombinierten Einsatz eines virtuellen DEM-Tiles zur Reduzierung von Latenzzeiten beim Laden von Geländedaten aus einer SD-Karte und der GPU-beschleunigten Verarbeitung, welche die rechenintensiven Operationen übernimmt, wird nicht nur die Systemperformance verbessert, sondern es wird auch ein ruckelfreies Bild auf dem Bildschirm ermöglicht. Dies führt zu einem erheblichen technischen Fortschritt gegenüber herkömmlichen, rein CPU-basierten Ansätzen.

## Patentansprüche

1. Verfahren (100) zur Anzeige von Hillshading-Bildern auf einem Fluginstrument (5) umfassend
- Bereitstellung von DEM-Daten (101),
- Bereitstellung zumindest eines ersten Speichers (40), eingerichtet zur Speicherung eines Hillshading-Bilds (1),
- Bereitstellung eines Displays (20),
- Bereitstellung einer Recheneinheit (10), welche mit dem zumindest einen Speicher (40) und dem Display (20) verbunden ist,
wobei basierend auf den DEM-Daten ein anpassbares Hillshading-Bild (1) berechnet (102) und an das Display (20) übermittelt (103) wird.

2. Verfahren (100) zur Anzeige von Hillshading-Bildern auf einem Fluginstrument (5) nach Anspruch 1, wobei das Verfahren zusätzlich die Bereitstellung einer Ortungseinheit (51), eingerichtet zur Erfassung (104) einer Position und Blickrichtung, umfasst und zur Anpassung des Hillshading-Bilds (1) die von der Ortungseinheit (51) erfasste Position und/oder Blickrichtung einbeziehbar ist.

3. Verfahren (100) zur Anzeige von Hillshading-Bildern auf einem Fluginstrument (5) nach Anspruch 1 oder 2, wobei zur Anpassung des Hillshading-Bilds (1) Informationen (105) über Talwinde, Aufwinde und/oder Positionen anderer Fluggeräte einbeziehbar sind.

4. Verfahren (100) zur Anzeige von Hillshading-Bildern auf einem Fluginstrument (5) nach einem der vorhergehenden Ansprüche, wobei zur Anpassung des Hillshading-Bilds (1) der Sonnenstand (106) und/oder Benutzerparameter (107) einbeziehbar sind.

5. Verfahren (100) zur Anzeige von Hillshading-Bildern auf einem Fluginstrument (5) nach einem der vorhergehenden Ansprüche, wobei ein erweitertes DEM-Modell mit Informationen über Wasserflächen, insbesondere ein erweitertes DEM-Modell, wobei Wasserflächen mittels eines dedizierten Bit gekennzeichnet sind, verwendbar ist.

6. Verfahren (100) zur Anzeige von Hillshading-Bildern auf einem Fluginstrument (5) nach einem der vorhergehenden Ansprüche, wobei die Recheneinheit (10) zumindest zwei Prozessoren (11, 12) umfasst, welche eingerichtet sind, zumindest teilweise parallel zueinander Berechnungen auszuführen, und wobei die Berechnung des Hillshading-Bilds (1) auf einem ersten der zumindest zwei Prozessoren erfolgt.

7. Verfahren zur Anzeige von Hillshading-Bildern auf einem Fluginstrument (5) nach einem der vorhergehenden Ansprüche, wobei der zumindest eine Speicher (40) einen ersten Tile-Buffer (41), einen zweiten Tile-Buffer (42) und einen Framebuffer (43) umfasst, und wobei die Berechnung des Hillshading-Bilds (1) umfasst:
a1. Auswahl eines Ausschnitts (2) entsprechend der erfassten Position und Blickrichtung aus einem im ersten Tile-Buffer (41) oder im zweiten Tile-Buffer (42) vorliegenden ersten Hillshading-Bild (1),
a2. Übertragung des Ausschnitts (2) an den Framebuffer (43),
a3. Vorbereitung des Ausschnitts (2) zur Anzeige,
a4. Übertragung des vorbereiteten Ausschnitts an das Display (20),
b. Berechnung eines zweiten Hillshading-Bilds und Speicherung dessen in dem jeweils anderen des ersten Tile Buffer (41) oder zweiten Tile-Buffer (42),
wobei die Schritte a1 bis a4 und b kontinuierlich und simultan ausgeführt werden und nach jedem Durchlauf der Schritte a1 bis a4 und b zwischen der Übertragung des Ausschnitts (2) an den Framebuffer (43) aus dem ersten Tile Buffer (41) und der Übertraung des Ausschnitts (2) an den Framebuffer (43) aus dem zweiten Tile Buffer (42) gewechselt wird.

8. Verfahren zur Anzeige von Hillshading-Bildern auf einem Fluginstrument (5) nach einem der vorhergehenden Ansprüche, wobei aus einer Teilmenge der DEM-Daten zumindest ein durchschnittlicher Neigungswert oder zumindest eine Höhendifferenz berechnet wird und das Hillshading-Bild basierend auf dem durchschnittlichen Neigungswert oder der Höhendifferenz anpassbar ist.

9. Verfahren zur Anzeige von Hillshading-Bildern auf einem Fluginstrument (5) nach einem der vorhergehenden Ansprüche, wobei aus den DEM-Daten vorberechnete Datenwerte berechnet werden, und basierend auf den vorberechneten Datenwerten ein anpassbares Hillshading-Bild (1) berechnet (102) und an das Display (20) übermittelt (103) wird.

10. Verfahren zur Anzeige von Hillshading-Bildern auf einem Fluginstrument (5) nach einem der Ansprüche 2 bis 9, wobei der Bildausschnitt (2) entsprechend der erfassten Position und Blickrichtung gegenüber dem Hillshading-Bild (1) drehbar ist.

11. Verfahren zur Anzeige von Hillshading-Bildern auf einem Fluginstrument (5) nach einem der vorhergehenden Ansprüche, wobei das Hillshading-Bild (1) und die DEM-Daten (101) entlang einer Achse überlagert werden.

12. Fluginstrument (5) zur Anzeige von Hillshading-Bildern nach einem Verfahren gemäss einem der Ansprüche 1 bis 11, umfassend zumindest
- Ein Display (20)
- Eine Ortungseinheit (51), eingerichtet zur Erfassung einer Position und Blickrichtung,
- Einen ersten Speicher (40), und
- Eine Recheneinheit (10), welche mit dem ersten Speicher (40), dem Display (20) und der Ortungseinheit (51) verbunden ist.

13. Fluginstrument (5) zur Anzeige von Hillshading-Bildern nach Anspruch 12, wobei das Fluginstrument (5) zusätzlich einen zweiten Speicher (30), eingerichtet zur Speicherung und Bereitstellung von komprimierten und dekomprimierten DEM-Daten, umfasst, und wobei der zweite Speicher (30) mit der Recheneinheit (5) verbunden ist.

14. Fluginstrument (5) zur Anzeige von Hillshading-Bildern nach Anspruch 12 oder 13, wobei die Recheneinheit (10) zumindest einen RAM-Speicher (15) umfasst, welcher RAM-Speicher (15) eingerichtet ist, in einem virtuellen Tile-Speicher DEM-Daten zu speichern.

15. Fluginstrument (5) zur Anzeige von Hillshading-Bildern nach einem der Ansprüche 12 bis 14, wobei das Fluginstrument (5) zusätzlich ein Funkmodul (52), eingerichtet zum Abrufen von DEM-Daten und/oder Tiles von einem Server, umfasst, und wobei das Funkmodul (52) mit der Recheneinheit (10) verbunden ist.

16. Fluginstrument (5) zur Anzeige von Hillshading-Bildern nach einem der Ansprüche 12 bis 15, wobei das Fluginstrument (5) zur Bedienung mit einem Fernsteuerungssystem eingerichtet ist.
